(19) Europäisches Patentamt
European Patent Office
Office européen des brevets

(11) EP 2 065 353 A1

(12) **EUROPEAN PATENT APPLICATION**
published in accordance with Art. 153(4) EPC

(43) Date of publication:
03.06.2009 Bulletin 2009/23

(51) Int Cl.:
*C04B 38/00* (2006.01)　*B81B 1/00* (2006.01)
*F04B 9/00* (2006.01)　*F04B 53/00* (2006.01)
*G01N 27/447* (2006.01)

(21) Application number: 07807836.7

(22) Date of filing: 25.09.2007

(86) International application number:
PCT/JP2007/068564

(87) International publication number:
WO 2008/035792 (27.03.2008 Gazette 2008/13)

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(30) Priority: 22.09.2006 JP 2006257542

(71) Applicant: NANO Fusion Technologies, Inc.
Tokyo 153-0065 (JP)

(72) Inventors:
• YANAGISAWA, Ichiro
Tokyo 1530065 (JP)
• FUJII, Mitsutaka
Tokyo 1530065 (JP)
• ISHIZUKA, Tomio
Tokyo 1530065 (JP)

(74) Representative: Klunker . Schmitt-Nilson . Hirsch
Destouchesstrasse 68
80796 München (DE)

(54) **ELECTROOSMOTIC MATERIAL, METHOD FOR PRODUCTION OF THE MATERIAL, AND ELECTROOSMOTIC FLOW PUMP**

(57) A porous sintered material is produced which is suitable as an electroosmotic material constituting an electroosmotic flow pump. At least one member selected from BaO, SrO, CaO, $TiO_2$, $ZrO_2$, $Na_2O$ and $K_2O$ or at least one member selected from a natural mineral substance containing aluminum silicate (e.g., alkali feldspar, kaolinite, petalite), $BaSiO_3$, $BaTiO_3$, $BaZrO_3$, $BaSiO_3$ and SiC is added in the total amount of 0.05 to 10 parts by weight to 100 parts by weight of fused quartz or fused silicate (matrix: $SiO_2$). The matrix may be $SiO_2$-$Al_2O_3$ which is composed of either one of fused quartz and fused silicate and fused alumina added thereto.

FIG. 1

EP 2 065 353 A1

**Description**

TECHNICAL FIELD

The present invention relates to an electroosmotic material usable in an electroosmotic flow pump suitable for controlling liquid driving of microfluidic chips for biotechnology, analytical chemistry, etc. and portable electronic devices, a method for producing the material, and an electroosmotic flow pump containing the material.

BACKGROUND ART

Microfluidic chips, which have a flow microchannel and a liquid control device on a small plastic or glass chip, function to conduct a chemical reaction, a biochemical reaction, etc. in the liquid control device. By utilizing the microfluidic chip, a system for the chemical or biochemical reaction can be miniaturized, and further the amount of a sample or reagent for the reaction can be remarkably reduced, whereby the measurement time can be shortened and the power consumption can be reduced in the system.

In the system, a small pump is needed to drive a liquid in the microfluidic chip. As the small pump, electroosmotic flow pumps utilizing an electroosmotic flow phenomenon have recently been used.

In the electroosmotic flow pump, a porous sintered body of a dielectric material, referred to as an electroosmotic material, is placed between a pair of electrodes. When a voltage is applied to the electroosmotic material between the electrodes, a liquid flow (an electroosmotic flow) is generated in the direction from one of the electrodes to the other. The electroosmotic flow pump can transfer a liquid without pulsation using the electroosmotic flow phenomenon, and thereby is expected to be used as a liquid driving pump in an electronic device or the like, as well as the liquid driving means of the microfluidic chip.

In view of widely using the electroosmotic flow pump in various fields, there are demands for size reduction, voltage reduction, cost reduction, and a large stable supply. For example, the inventor considers that it is preferred that the liquid driving pump in a fuel cell for a portable electronic device has a size of 10 mm or less and a flow channel cross-sectional area (i.e., an electroosmotic material cross-sectional area) of 100 mm$^2$ or less in view of restrictions in shape, and further has a flow rate of approximately 500 $\mu$L/min, a pressure characteristic of approximately 50 kPa, and a driving voltage of 24 V or less, preferably 6 V or less. In addition, the liquid driving pump needs to have a long operating life (i.e., long-term durability) to stably maintain its function for a long time. Furthermore, it is desired to develop a mass production system capable of producing millions of the pumps per 1 lot.

In most of conventional development researches in view of the above demands, required pump flow rate and pressure characteristic are obtained by modifying mechanical design, for example by modifying the shape of the electroosmotic material or the structure of the pump. Studies have not been made on the improvement of the electroosmotic material for increasing the various properties, the long-term stability, and the mass productivity of the electroosmotic flow pump.

Though the electroosmotic material is generally composed of silicon oxide (silica SiO$_2$), various oxides of aluminum oxide (alumina), titanium oxide (titania), zirconium oxide (zirconia), cerium oxide, lanthanum oxide, yttrium oxide, hafnium oxide, magnesium oxide, and tantalum oxide, as well as the silica, is used in the amorphous, glassy, or crystalline state in Patent Document 1. It is described in Patent Document 1 that also a mixture of the oxides can be used.

A pump material containing at least one component selected from the group consisting of silicon nitride, titania, alumina, silica, borosilicate salts, VYCOR, and plastics is proposed in Patent Document 2.

Patent Document 1: US Patent Application Publication No. 2002/0189947
Patent Document 2: Japanese Laid-Open Patent Publication No. 2006-516831 (PCT)

DISCLOSURE OF THE INVENTION

As described above, there are demands for miniaturizing the electroosmotic flow pump while maintaining the flow rate and pressure characteristic, lowering the driving voltage, reducing the costs, and improving the mass productivity, in view of putting the electroosmotic flow pump into practical use.

Various properties of the electroosmotic flow pump, such as the maximum flow rate of the liquid to be driven, the maximum pressure, and the efficiency, vary depending also on the structure of the electroosmotic flow pump. Thus, for example, the above properties can vary depending on the geometric shape of the electroosmotic material, the structure or position of the electrode, etc. More specifically, the electric field strength can be increased to improve the liquid flow rate by reducing the thickness of the electroosmotic material. Further, even under the same electric field strength, the flow rate can be improved by increasing the cross-sectional area which the liquid passes through. Furthermore, the flow rate can be increased also by increasing the driving voltage. Thus, the flow rate can be increased by reducing the thickness of the electroosmotic material, by increasing the cross-sectional area in the direction of transferring (driving) the liquid, and by increasing the driving voltage.

As is clear from this discussion, one of the simplest methods for changing the flow rate and the pressure of the liquid in the electroosmotic flow pump is the above method containing modification of the geometric shape of the electroosmotic material and the driving voltage.

However, when the thickness of the electroosmotic material is reduced, the electroosmotic material is not sufficient in strength, whereby for example, the pump cannot be assembled easily and is poor in pressure resistance and long-term durability disadvantageously. In addition, the increase of the cross-sectional area of the electroosmotic material results in a large electroosmotic flow pump. Furthermore, the increase of the driving voltage results in a large power consumption, and a low efficiency. Therefore, in an application with a strict restriction in the pump size or the power consumption, it is difficult to change the geometric shape and the driving voltage of the electroosmotic material to improve the properties of the electroosmotic flow pump such as the flow rate and the pressure characteristic.

The inventor has focused attention on the electroosmotic material on the basis of the above facts. This is because the flow rate and the pressure can be improved without changing the size or the driving voltage of the electroosmotic flow pump by using an electroosmotic material excellent in liquid driving ability.

The electroosmotic material may comprise a porous sintered body of silica particles, for example. In this case, the properties of the electroosmotic material can vary depending also on the diameters of the silica particles. For example, the pressure characteristic can be improved by using a porous sintered body of silica particles having small diameters as the electroosmotic material. However, in this case, the electroosmotic material has a low porosity, so that the flow rate and the efficiency are lowered. Thus, the pressure characteristic is in a trade-off relation with the flow rate and efficiency. When one is improved, the other is deteriorated disadvantageously. In other words, it is difficult to provide an electroosmotic flow pump satisfying all the conditions of small size, low voltage, and high efficiency.

In the case of sintering the silica particles, the particles often exhibit an unstable sintering behavior, and the resultant porous sintered body cannot be sufficient in strength. Thus, it is not easy to maintain sufficient mass productivity, quality stability, and product operating life of the electroosmotic flow pump.

In Patent Documents 1 and 2, though many materials are described as examples of the electroosmotic material, the properties (particularly properties in methanol) of each electroosmotic material are not studied at all, and it is not sufficiently clear whether or not a small-size, low-voltage, high-efficiency electroosmotic flow pump can be obtained using the electroosmotic material. Furthermore, each electroosmotic material made of various materials described in Patent Documents 1 and 2 has an unstable sintering property, and the resultant electroosmotic material (the porous sintered body) has an insufficient strength. Thus, it is presumed that the electroosmotic flow pump using the electroosmotic material cannot achieve satisfactory mass productivity, quality stability, and product operating life.

An object of the present invention is to solve the above problems, thereby providing an electroosmotic material that is more excellent in various properties evaluated in a certain method than conventional silica material, has a long-term durability, and can be mass-produced with a small quality variation from lot to lot, and a method for producing the electroosmotic material, and an electroosmotic flow pump containing the electroosmotic material.

In view of the above object, according to the present invention, there is provided an electroosmotic material comprising a porous sintered body of a dielectric material, wherein

when the dielectric material is brought into contact with a liquid, a surface of the dielectric material is electrically charged,

when a voltage is applied between a first electrode and a second electrode in an electroosmotic flow pump, the electroosmotic material generates an electroosmotic flow in the direction from the first electrode to the second electrode or the reverse direction,

0.05 to 10 parts by weight in total of at least one component selected from the group consisting of $BaO$, $SrO$, $CaO$, $TiO_2$, $ZrO_2$, $Na_2O$, and $K_2O$ components is added to 100 parts by weight of a fused quartz or a fused silicic acid, and the fused quartz or the fused silicic acid has an average particle diameter of 0.2 to 7.5 $\mu$m.

In the case of using an amorphous silica, a porous sintered body thereof cannot be easily obtained because of large volume shrinkage in sintering. When the sintering temperature is lowered to reduce the volume shrinkage, the resultant porous sintered body exhibits a low strength. In addition, it seems difficult to produce such a porous sintered body with long-term durability because of a relatively large elution amount in a liquid contact state.

In contrast, a powder of the fused quartz or the fused silicic acid has an approximately uniform spherical shape. The porous sintered $SiO_2$ body can be easily obtained by using such a powder. Additionally the resultant porous sintered $SiO_2$ body is excellent in strength and long-term durability.

When the fused quartz or the fused silicic acid has an average particle diameter within the above range, the average pore diameter and the average porosity of the electroosmotic material can be significantly easily controlled within preferred ranges.

The porous sintered body of the fused quartz or the fused silicic acid mixed with the above component has a high mechanical strength, and is more excellent in various electroosmotic properties than simple sintered $SiO_2$ bodies.

Further, the porous sintered body is chemically and physically stable, and exhibits a stable function for a long time.

In short, the electroosmotic material of the present invention can exhibit excellent properties over a long time.

The fused quartz and the fused silicic acid may be used in combination in the present invention, as well as in the following embodiments.

Another additive may be used instead of the above component. Thus, according to the present invention, there is provided an electroosmotic material comprising a porous sintered body of a dielectric material, wherein

when the dielectric material is brought into contact with a liquid, a surface of the dielectric material is electrically charged, when a voltage is applied between a first electrode and a second electrode in an electroosmotic flow pump, the electroosmotic material generates an electroosmotic flow in the direction from the first electrode to the second electrode or the reverse direction,

0.05 to 10 parts by weight in total of at least one component selected from the group consisting of natural minerals containing an aluminum silicate salt, $BaSiO_3$, $BaTiO_3$, $BaZrO_3$, $SrSiO_3$, and SiC is added to 100 parts by weight of a fused quartz or a fused silicic acid, and

the fused quartz or the fused silicic acid has an average particle diameter of 0.2 to 7.5 $\mu$m.

Also in this case, the electroosmotic material can exhibit excellent properties over a long time as described above.

Preferred examples of the natural minerals include alkali feldspars, kaolinites, and petalites.

An $SiO_2$-$Al_2O_3$. prepared by partly replacing the fused quartz or the fused silicic acid with a fused alumina may be used as the matrix. Thus, according to the present invention, there is provided an electroosmotic material comprising a porous sintered body of a dielectric material, wherein

when the dielectric material is brought into contact with a liquid, a surface of the dielectric material is electrically charged, when a voltage is applied between a first electrode and a second electrode in an electroosmotic flow pump, the electroosmotic material generates an electroosmotic flow in the direction from the first electrode to the second electrode or the reverse direction,

0.05 to 10 parts by weight in total of at least one component selected from the group consisting of BaO, SrO, CaO, $TiO_2$, $ZrO_2$, $Na_2O$, and $K_2O$ components is added to 100 parts by weight of an $SiO_2$-$Al_2O_3$, the mole ratio of a fused quartz or a fused silicic acid:a fused alumina being 65 to 99.8:35 to 0.2 in the $SiO_2$-$Al_2O_3$, and

the fused quartz or the fused silicic acid has an average particle diameter of 0.2 to 7.5 $\mu$m, and the fused alumina has an average particle diameter of 0.3 to 10 $\mu$m.

Of course the above additive may be used also in the case of using the $SiO_2$-$Al_2O_3$ as the matrix. Thus, according to the present invention, there is provided an electroosmotic material comprising a porous sintered body of a dielectric material, wherein

when the dielectric material is brought into contact with a liquid, a surface of the dielectric material is electrically charged, when a voltage is applied between a first electrode and a second electrode in an electroosmotic flow pump, the electroosmotic material generates an electroosmotic flow in the direction from the first electrode to the second electrode or the reverse direction,

0.05 to 10 parts by weight in total of at least one component selected from the group consisting of natural minerals containing an aluminum silicate salt, $BaSiO_3$, $BaTiO_3$, $BaZrO_3$, $SrSiO_3$, and SiC is added to 100 parts by weight of an $SiO_2$-$Al_2O_3$, the mole ratio of a fused quartz or a fused silicic acid:a fused alumina being 65 to 99.8:35 to 0.2 in the $SiO_2$-$Al_2O_3$, and

the fused quartz or the fused silicic acid has an average particle diameter of 0.2 to 7.5 $\mu$m, and the fused alumina has an average particle diameter of 0.3 to 10 $\mu$m.

When the liquid for generating the electroosmotic flow is an alcohol such as methanol, the porous sintered body (the electroosmotic material) containing the $SiO_2$ (the fused quartz or the fused silicic acid)-$Al_2O_3$ (the fused alumina) as the matrix exhibits an excellent durability.

Also in this case, preferred examples of the natural minerals include alkali feldspars, kaolinites, and petalites.

Each of the above electroosmotic materials preferably has an average porosity of 25% to 52% and an average pore diameter of 0.1 to 8 $\mu$m. In this case, the electroosmotic material can function most efficiently.

According to the present invention, there is provided a method for producing an electroosmotic material, comprising the steps of:

adding 0.05 to 10 parts by weight in total of a powder containing at least one component selected from the group consisting of BaO, SrO, CaO, $TiO_2$, $ZrO_2$, $Na_2O$, and $K_2O$ components or at least one component selected from the group consisting of natural minerals containing an aluminum silicate salt, $BaSiO_3$, $BaTiO_3$, $BaZrO_3$, $SrSiO_3$, and SiC to 100 parts by weight of a fused quartz powder or a fused silicic acid powder to obtain a mixed powder; calcining the mixed powder at 800°C to 1280°C to obtain a calcine; milling the calcine to obtain a calcined powder having an average particle diameter of 0.1 to 8.5 $\mu$m; adding a binder to the calcined powder, and forming the resultant mixture to obtain a shape; and

sintering the shape at 1000°C to 1350°C to obtain a porous sintered body, wherein
the fused quartz powder or the fused silicic acid powder has an average particle diameter of 0.2 to 7.5 $\mu$m.

According to the present invention, there is provided another method for producing an electroosmotic material, comprising the steps of:

adding 0.05 to 10 parts by weight in total of a powder containing at least one component selected from the group consisting of $BaO$, $SrO$, $CaO$, $TiO_2$, $ZrO_2$, $Na_2O$, and $K_2O$ components or at least one component selected from the group consisting of natural minerals containing an aluminum silicate salt, $BaSiO_3$, $BaTiO_3$, $BaZrO_3$, $SrSiO_3$, and $SiC$ to 100 parts by weight of an $SiO_2$-$Al_2O_3$ powder, the mole ratio of a fused quartz or a fused silicic acid:a fused alumina being 65 to 99.8:35 to 0.2 in the $SiO_2$-$Al_2O_3$ powder to obtain a mixed powder;
calcining the mixed powder at 800°C to 1280°C to obtain a calcine;
milling the calcine to obtain a calcined powder having an average particle diameter of 0.1 to 8.5 $\mu$m;
adding a binder to the calcined powder, and forming the resultant mixture to obtain a shape; and
snitering the shape at 1000°C to 1350°C to obtain a porous sintered body, wherein
the fused quartz powder or the fused silicic acid powder has an average particle diameter of 0.2 to 7.5 $\mu$m, and the fused alumina powder has an average particle diameter of 0.3 to 10 $\mu$m.

When the fused quartz powder or the fused silicic acid powder and the fused alumina powder have average particle diameters within the above ranges, the average pore diameter and the average porosity of the electroosmotic material can be significantly easily controlled within preferred ranges.

When the calcining temperature and the sintering temperature are within the above ranges, the resultant electroosmotic material can be excellent in various properties such as mechanical strength and electroosmotic properties.

The operation of above producing method is significantly simple, and a large number of the porous sintered bodies can be produced by the method at once. Therefore, the method can be used for mass production of the electroosmotic material and electroosmotic flow pump.

An electroosmotic flow pump according to the present invention comprises the above described electroosmotic material.

The electroosmotic flow pump has a higher flow rate with a good pressure characteristic as compared with conventional electroosmotic flow pumps having the same shape and size and containing an electroosmotic material of a porous sintered $SiO_2$ body. Thus, in the electroosmotic flow pump of the present invention, the flow rate and pressure can be increased even when the pump has a small size. Further, the electroosmotic flow pump can maintain the properties over a long time.

In the present invention, the electroosmotic material is prepared by adding a certain amount of various types of components to the fused quartz or the fused silicic acid, or the $SiO_2$ (the fused quartz or the fused silicic acid)-$Al_2O_3$ (the fused alumina) having a certain average particle diameter. As a result, the electroosmotic material is more excellent in various electroosmotic properties than conventional simple sintered $SiO_2$ bodies, and is excellent also in mechanical strength. Thus, for example, the electroosmotic material can be used for producing a small electroosmotic flow pump that can be used under high flow rate and pressure and can stably maintain the properties over a long time.

Furthermore, since a large number of the electroosmotic materials can be easily produced at once, the method of the present invention can meet the requirement for mass production of the electroosmotic flow pumps.

BRIEF DESCRIPTION OF THE DRAWINGS

FIG. 1 is a schematic perspective view showing a principal part of a pump system having an electroosmotic flow pump containing an electroosmotic material according to an embodiment of the present invention;
FIG. 2 is a cross-sectional view taken along the line II-II in FIG. 1;
FIG. 3 is an SEM photograph of a fused quartz, a starting material of the electroosmotic material according to the embodiment;
FIG. 4 is a table showing additives and composition ratios thereof in first porous sintered bodies;
FIG. 5 is a table showing various properties, etc. of the porous sintered bodies of FIG. 4;
FIG. 6 is a table showing additives and composition ratios thereof in second porous sintered bodies;
FIG. 7 is a table showing various properties, etc. of the porous sintered bodies of FIG. 6;
FIG. 8 is a table showing additives and composition ratios thereof in third porous sintered bodies;
FIG. 9 is a table showing various properties, etc. of the porous sintered bodies of FIG. 8;
FIG. 10 is a table showing additives and composition ratios thereof in fourth porous sintered bodies;

FIG. 11 is a table showing various properties, etc. of the porous sintered bodies of FIG. 10;
FIG. 12 is a table showing conditions for producing porous sintered bodies; and
FIG. 13 is a table showing various properties, etc. of the porous sintered bodies of FIG. 12.

## BEST MODE FOR CARRYING OUT THE INVENTION

A preferred embodiment of the electroosmotic material and the producing method of the present invention will be described in detail below in terms of the electroosmotic flow pump containing the material with reference to accompanying drawings.

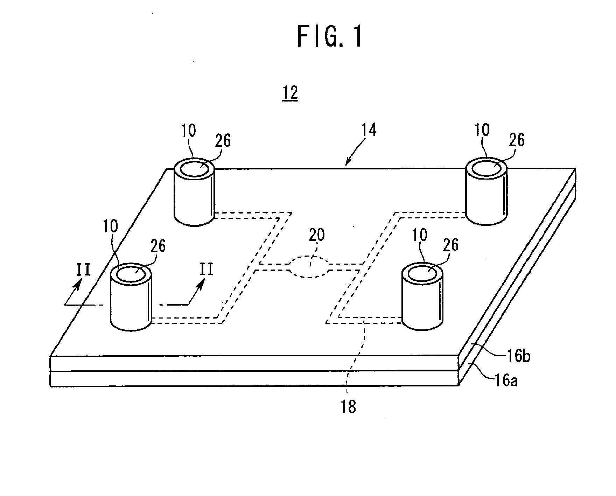

FIG. 1 is a schematic perspective view showing a principal part of a pump system 12 containing electroosmotic flow pumps 10 according to this embodiment. In the pump system 12, four electroosmotic flow pumps 10 are directly attached to the upper surface of a microfluidic chip 14.

The microfluidic chip 14 has approximately a length of 10 cm, a width of 5 cm, and a thickness of 2 mm, and is formed by adhesive- or thermal fusion-bonding surfaces of a first substrate 16a and a second substrate 16b composed of a glass, a plastic, silicon, etc.

In this embodiment, a groove is formed in a predetermined pattern on the upper surface of the first substrate 16a, and holes corresponding to the ends of the groove are formed in the second substrate 16b. When the first substrate 16a and the second substrate 16b are bonded, a second flow channel 18 is formed by the groove, the bottom surface of the second substrate 16b, and the holes. The hole acts as a connection hole 36 between the second flow channel 18 and the electroosmotic flow pump 10. As shown in FIG. 1, a reactor 20 is connected to the second flow channel 18 as a part of the groove at the center of the microfluidic chip 14.

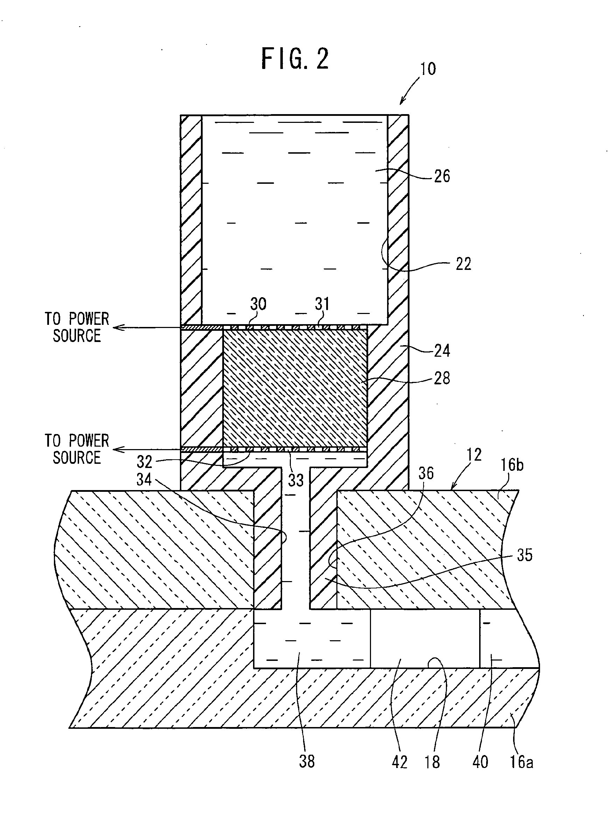

The electroosmotic flow pump 10 has a height of approximately 10 mm or less. As shown in FIGS. 1 and 2, a first flow channel 22 is formed inside a hollow cylindrical pump body 24 such that a driving liquid 38 can be supplied to or suctioned from the second flow channel 18. In the first flow channel 22, a first electrode 30 having a plurality of pores 31 for transporting the liquid, an electroosmotic material 28, and a second electrode 32 having a plurality of pores 33 are disposed in this order in the axial direction of the first flow channel 22.

In this embodiment, in the electroosmotic flow pump 10, the first electrode 30 is disposed upstream of the electroosmotic material 28, and the second electrode 32 is disposed downstream thereof.

In the first flow channel 22, a reservoir 26 is disposed upstream of the first electrode 30, and the liquid 38 is supplied thereto from the outside. A protrusion 35 extending toward the microfluidic chip 14 is formed on the downstream side of the electroosmotic flow pump 10, and is fitted to the connection hole 36. In the protrusion 35, an outlet 34 for the liquid 38 is formed in the axial direction of the first flow channel 22.

The pump body 24 is composed of a material resistant to the liquid 38 transferred in the first flow channel 22, such as an electrolyte solution. Such materials include plastics, ceramics, glasses, and metal materials having an electrically insulated surface.

The first electrode 30 and the second electrode 32 are composed of a conductive material such as platinum, silver, carbon, or a stainless steel, and have a porous structure as shown in FIG. 2. The electrodes may have a structure other than the porous structure, such as a wire structure, a mesh structure, or a sheet structure. Alternatively, each electrode may be a conductive deposition formed by vapor-depositing the conductive material onto the upstream or downstream side of the electroosmotic material 28. The first electrode 30 and the second electrode 32 are electrically connected to a power source (not shown).

In this embodiment, one of first to fourth porous sintered bodies containing a matrix of a fused quartz or fused silicic acid doped with an additive is used as the electroosmotic material 28.

In the first porous sintered body, 0.05 to 10 parts by weight in total of at least one component selected from the group consisting of BaO, SrO, CaO, $TiO_2$, $ZrO_2$, $Na_2O$, and $K_2O$ components is added to 100 parts by weight of the fused quartz or fused silicic acid.

In this case, the fused quartz or fused silicic acid acts as a matrix of the first porous sintered body, and functions to generate a desirable zeta potential in the first porous sintered body and to maintain chemical stability toward the liquid (i.e., durability). The matrix shows only small thermal shrinkage in the sintering step of the producing method to be hereinafter described, whereby the designed size can be easily kept. Thus, the porous sintered body (the electroosmotic material 28) having a desired size can be easily obtained. Furthermore, the porous sintered body can have a high mechanical strength and a low property nonuniformity.

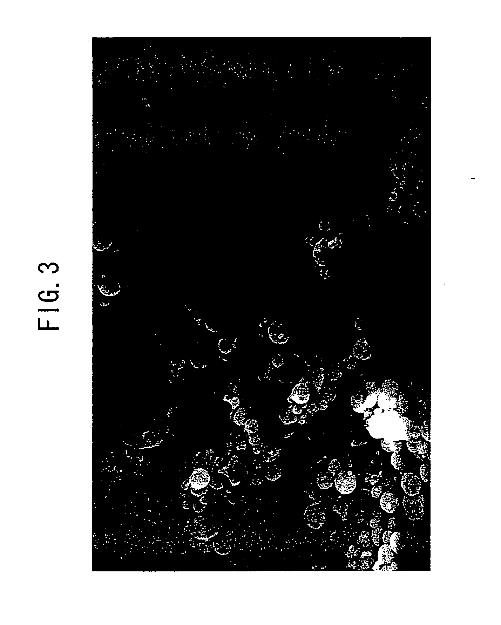

An electron microscope (SEM) photograph of the electroosmotic material 28 comprising the fused quartz is shown in FIG. 3. The fused quartz has an average particle diameter of 0.2 to 7.5 $\mu$m, which is obtained by dividing the sum of longer diameter and shorter diameter observed using an SEM photograph at 5000-fold magnification by 2. Also the starting material of the electroosmotic material 28 (the porous sintered body), the fused quartz powder, has an average particle diameter within the same range.

As is clear from the SEM photograph, the fused quartz has a substantially spherical shape in the electroosmotic material 28. The electroosmotic flow pump 10 using the porous sintered body containing such a substantially spherical fused quartz as the electroosmotic material 28 is more excellent in various properties evaluated based on a normalized flow rate coefficient, a normalized pressure coefficient, and a normalized transfer coefficient to be hereinafter described, than electroosmotic flow pumps containing an electroosmotic material prepared by using an $SiO_2$ powder obtained by milling a bulk body as a starting material powder and by adding the above additive thereto. This is true also in the case of using the fused silicic acid or a fused alumina described below.

The fused quartz powder per se has a substantially spherical shape. Thus, in the case of using the fused quartz powder in a starting material, the starting material particles containing the fused quartz and the above component are bonded to each other while maintaining the spherical shape to provide the porous sintered body. The starting material particles may be bonded in the clumped state or complex state in some cases.

When the starting material powder, and therefore the fused quartz or fused silicic acid in the electroosmotic material 28 have an average particle diameter of less than 0.2 $\mu$m, the electroosmotic material 28 has a low average porosity and an average pore diameter of 0.1 $\mu$m or less, whereby the flow rate is reduced, and the efficiency is deteriorated. On the other hand, when the average particle diameter is more than 7.5 $\mu$m, the powder is not sintered uniformly, and the electroosmotic material 28 has an excessively high average porosity and an average pore diameter of 8 $\mu$m or more, whereby the resultant pump cannot show a sufficient pump property. The fused quartz or fused silicic acid more preferably has an average particle diameter of 0.7 to 3.0 $\mu$m, and in this case various properties can be easily controlled and the electroosmotic material 28 has high uniformity.

Also in the second to fourth porous sintered bodies, the average particle diameter of the fused quartz or fused silicic acid is 0.2 to 7.5 $\mu$m, more preferably 0.7 to 3.0$\mu$ m, due to the above reasons.

The additives of the BaO, SrO, and CaO components act to expand the acceptable sintering temperature range in the production of the first porous sintered body. Thus, by using the components, the sintering step can be carried out within a wider temperature range, whereby the resultant electroosmotic material 28 can have a stable quality and a small thickness.

When the porous sintered body of $SiO_2$ (the fused quartz or fused silicic acid) doped with at least one of the BaO, SrO, and CaO components is used as the electroosmotic material 28, the electroosmotic flow pump 10 exhibits a higher flow rate/current ratio as compared with pumps using a porous sintered simple $SiO_2$ body. Furthermore, when methanol or the like is introduced to the porous sintered body containing all the BaO, SrO, and CaO components, the flow rate coefficient, the pressure coefficient, and the transfer efficiency coefficient can be increased to more than 0.1, 2.0, and 0.5, respectively.

When the total ratio of at least one of the BaO, SrO, and CaO components is less than 0.05 parts by weight, the effect of uniformly sintering the inside becomes insufficient. On the other hand, when the ratio is more than 10 parts by weight, it is difficult to uniformly sinter the powder, and the average particle diameter is increased to enlarge the pore diameter. As a result, the mechanical strength is lowered, whereby the operating life or the like is often deteriorated.

The $TiO_2$ component acts to easily control the porosity and the pore diameter of the first porous sintered body. Thus, by adding the $TiO_2$ component, the porosity and the pore diameter of the first porous sintered body can be easily controlled within a desired range.

Also by controlling the porosity and the pore diameter in the above manner, the flow rate/current ratio of the electroosmotic flow pump 10 can be increased, so that the normalized flow rate coefficient, the normalized pressure coefficient, and the normalized transfer efficiency coefficient can be increased respectively. When the ratio of the $TiO_2$ component is less than 0.05 or more than 10 parts by weight, the effect of controlling the porosity and the pore diameter of the first porous sintered body is insufficient.

The $ZrO_2$ component acts to increase the mechanical strength of the first porous sintered body. Thus, by adding the $ZrO_2$ component, the resultant electroosmotic material 28 can exhibit a sufficient mechanical strength with a small size. As a result, the electroosmotic flow pump 10 having a small size and a high performance can be produced.

When the ratio of the $ZrO_2$ component is less than 0.05 parts by weight, the effect of increasing the mechanical strength is insufficient. On the other hand, when the ratio is more than 10 parts by weight, it is difficult to uniformly sinter the powder, and the porosity is increased.

The $Na_2O$ and $K_2O$ components act to reduce the acceptable sintering temperature for producing the first porous sintered body. Thus, the resultant first porous sintered body (the electroosmotic material 28) can have a uniform internal structure even with a relatively large size. Furthermore, the electroosmotic material 28 containing at least one of the $Na_2O$ and $K_2O$ components can remarkably improve the flow rate, so that the flow rate and the pressure can be increased at a certain voltage.

When the ratio of at least one of the $Na_2O$ and $K_2O$ components is less than 0.05 parts by weight, the effect of uniformly sintering the inside is insufficient. On the other hand, when the ratio is more than 10 parts by weight, the acceptable sintering temperature range is significantly narrowed, and temperature management cannot be easily carried out in the sintering step, resulting in complicated process.

The total amount of the BaO, SrO, CaO, $TiO_2$, $ZrO_2$, $Na_2O$, and $K_2O$ components added is 0.05 to 10 parts by weight. Thus, in the case of adding only one of the components, the amount of the component is 0.05 to 10 parts by weight per 100 parts by weight of the fused quartz or fused silicic acid. In the case of adding two or more of the components, the total amount of the components is 0.05 to 10 parts by weight per 100 parts by weight of the fused quartz or fused silicic acid.

The second porous sintered body will be described below. In the second porous sintered body, 0.05 to 10 parts by weight in total of at least one component selected from the group consisting of natural minerals containing an aluminum silicate salt, $BaSiO_3$, $BaTiO_3$, $BaZrO_3$, $SrSiO_3$, and SiC is added to 100 parts by weight of the fused quartz or fused silicic acid.

The fused quartz or fused silicic acid ($SiO_2$) in the second porous sintered body may be the same as in the first porous sintered body.

The natural mineral containing an aluminum silicate salt can be easily solid-phase-reacted with the main component of the fused quartz or fused silicic acid. Thus, by using the component, the second porous sintered body having excellent properties can be easily obtained. As a result, the pump property of the electroosmotic flow pump 10 can be improved and stabilized.

Preferred examples of the natural minerals containing an aluminum silicate salt include alkali feldspars, kaolinites, and petalites. Among them, the alkali feldspar and the petalite act to reduce the acceptable sintering temperature of the second porous sintered body. Thus, they function in the same manner as the $Na_2O$ and $K_2O$ components above, and the resultant second porous sintered body (the electroosmotic material 28) can have a uniform internal structure even with a relatively large size. Furthermore, also the electroosmotic material 28 containing at least one of the alkali feldspar and petalite can remarkably improve the flow rate, so that the flow rate and the pressure can be increased at a certain voltage. When the ratio of at least one of the alkali feldspar and the petalite is less than 0.05 parts by weight, the effect of uniformly sintering the inside is insufficient. On the other hand, when the ratio is more than 10 parts by weight, the acceptable sintering temperature range is significantly narrowed, and temperature management cannot be easily carried out in the sintering step.

The kaolinite acts to expand the acceptable sintering temperature range in the production of the second porous sintered body. Further, the kaolinite inhibits a reduction reaction in the sintering step for producing the second porous sintered body, to suppress unevenness of the average porosity and the average pore diameter. When the ratio of the kaolinite is less than 0.05 parts by weight, the above effect is insufficient. On the other hand, when the ratio is more than 10 parts by weight, the sintering property of the second porous sintered body is often deteriorated, thereby resulting in a brittle sintered body.

Also $BaSiO_3$, $BaTiO_3$, $BaZrO_3$, $SrSiO_3$, and SiC can be easily solid-phase-reacted with the main component of the fused quartz or fused silicic acid. Thus, by using the component, the shrinkage in the sintering step can be reduced to stably obtain the uniform second porous sintered body. In addition, the resultant second porous sintered body can be sufficient in the chemical stability toward the liquid and the mechanical strength.

Furthermore, since the shrinkage in the sintering step is small, the designed size can be easily kept. Thus, the second porous sintered body (the electroosmotic material 28) having a desired size can be easily obtained.

The $BaSiO_3$ acts to expand the acceptable sintering temperature range in the production of the second porous sintered body. Thus, by using the components, the sintering step can be carried out within a wider temperature range, whereby the resultant electroosmotic material 28 can have a stable quality and a small thickness. Particularly the electroosmotic flow pump 10 can exhibit a higher flow rate/current ratio as compared with pumps using a porous sintered simple $SiO_2$ body. Furthermore, even when the second porous sintered body is used to generate an electroosmotic flow for a long time in the electroosmotic flow pump 10, the properties such as the flow rate coefficient, the pressure coefficient, the transfer efficiency coefficient, and the strength are hardly deteriorated.

When the ratio of the $BaSiO_3$ is less than 0.05 parts by weight, the effect of uniformly sintering the inside is insufficient. On the other hand, when the ratio is more than 10 parts by weight, it is difficult to uniformly sinter the powder, and the average particle diameter is increased to enlarge the pore diameter in some cases. As a result, the mechanical strength may be lowered, whereby the operating life or the like is often deteriorated. The amount of the $BaSiO_3$ is more preferably 1.5 to 6 parts by weight.

The $BaTiO_3$ acts to easily control the porosity and the pore diameter of the second porous sintered body. Thus, by adding the $BaTiO_3$, the porosity and the pore diameter of the second porous sintered body can be easily controlled within a desired range. Therefore, the flow rate/current ratio of the electroosmotic flow pump 10 can be increased, so that the flow rate coefficient, the pressure coefficient, and the transfer efficiency coefficient can be increased to more than 0.1, 2.0, and 0.5, respectively, in the same manner as the first porous sintered body containing the $TiO_2$. When the ratio of the $BaTiO_3$ is less than 0.05 or more than 10 parts by weight, the effect of controlling the porosity and the pore diameter of the second porous sintered body is insufficient.

In the case of adding the $BaZrO_3$ or $SrSiO_3$, the mechanical strength of the second porous sintered body is increased. Thus, by adding the component, the resultant electroosmotic material 28 can exhibit a sufficient mechanical strength with a small size. As a result, the electroosmotic flow pump 10 having a small size and a high performance can be produced. When the ratio of the $BaZrO_3$ or $SrSiO_3$ is less than 0.05 parts by weight, the above effect is insufficient. On the other hand, when the ratio is more than 10 parts by weight, it is difficult to uniformly sinter the powder, and the porosity is increased.

Also the SiC acts to remarkably increase the mechanical strength of the second porous sintered body. Thus, by adding the SiC, the electroosmotic material 28 can have a complicated shape with a small thickness. Therefore, the electroosmotic flow pump 10 can be miniaturized.

The electroosmotic material 28 may further contain an alumina. The third and fourth porous sintered bodies are such that the fused quartz or fused silicic acid ($SiO_2$) in the first and second porous sintered bodies is partly replaced with a fused alumina ($Al_2O_3$) to form an $SiO_2$-$Al_2O_3$ matrix, respectively.

More specifically, in the third porous sintered body, 0.05 to 10 parts by weight in total of at least one component selected from the group consisting of BaO, SrO, CaO, $TiO_2$, $ZrO_2$, $Na_2O$, and $K_2O$ components is added to 100 parts by weight of an $aSiO_2$-$bAl_2O_3$. The third porous sintered body can be produced by sintering a mixed powder containing the fused quartz or silicic acid powder, the fused alumina powder, and the starting material powder of the component.

In the above formula, a and b each represent a mole ratio (mol%), and the total thereof is 100. a is 65 to 99.8, and b is 35 to 0.2. Thus, the ratio of $SiO_2$ is controlled within 65 to 99.8 mol%, and the ratio of $Al_2O_3$ is controlled within 35 to 0.2 mol%. When the $SiO_2$ ratio is less than 65 mol%, the sintering temperature for producing the third porous sintered body is increased, and the quality tends to vary slightly widely. Furthermore, the average porosity of the third porous sintered body is lowered to 25% or less. On the other hand, the $SiO_2$ ratio is more than 99.8 mol%, the sintering cannot be uniformly carried out with ease, and it is difficult to control desired porosity and the pore diameter.

The average particle diameter of the fused quartz or fused silicic acid in the third porous sintered body may be the same as in the first and second porous sintered bodies. The average particle diameter of the fused alumina is controlled within the range of 0.3 to 10 $\mu$m. When the average particle diameter is less than 0.3 $\mu$m, the average porosity of the third porous sintered body is lowered, and the average pore diameter is reduced nonuniformly. On the other hand, when the average particle diameter is more than 10 $\mu$m, the average porosity is excessively increased due to sintering nonuniformity.

The functions of the BaO, SrO, CaO, $TiO_2$, $ZrO_2$, $Na_2O$, and $K_2O$ components and the reason for controlling the amount within 0.05 to 10 parts by weight in the third porous sintered body are the same as in the first porous sintered body.

In the fourth porous sintered body, 0.05 to 10 parts by weight in total of at least one component selected from the group consisting of natural minerals containing an aluminum silicate salt, $BaSiO_3$, $BaTiO_3$, $BaZrO_3$, $SrSiO_3$, and SiC is added to 100 parts by weight of an $aSiO_2$-$bAl_2O_3$. Also the fourth porous sintered body can be produced by sintering a mixed powder containing the fused quartz or silicic acid powder, the fused alumina powder, and the starting material powder of the component.

In the fourth porous sintered body, the $SiO_2$ ratio is controlled within 65 to 99.8 mol%, and the $Al_2O_3$ ratio is controlled within 35 to 0.2 mol%, in the same manner as the third porous sintered body. The functions of the natural mineral containing an aluminum silicate salt, $BaSiO_3$, $BaTiO_3$, $BaZrO_3$, $SrSiO_3$, and SiC and the reason for controlling the amount within 0.05 to 10 parts by weight in the fourth porous sintered body are the same as in the second porous sintered body.

In the case of using the third or fourth porous sintered body containing the alumina as the electroosmotic material 28, the resultant electroosmotic flow pump 10 has excellent properties when the liquid is an alcohol, particularly methanol.

Each of the first to fourth porous sintered bodies preferably has an average porosity of 25% to 52% and an average pore diameter of 0.1 to 8 $\mu$m. When the average porosity is less than 25% or the average pore diameter is less than 0.1 $\mu$m, it is difficult to obtain stable properties. On the other hand, when the average porosity is more than 52% or the average pore diameter is more than 8 $\mu$m, the resultant porous sintered body hardly acts as the electroosmotic material 28.

The first to fourth porous sintered bodies preferably have a spherical crystal state, a clumped crystal state, or a complex crystal state. The electroosmotic material 28 having such a crystal state can maintain excellent properties for a longer time as compared with an electroosmotic material of a porous sintered body containing only the fused quartz or fused silicic acid. For example, a normalized flow rate coefficient of more than 0.1, a normalized pressure coefficient of more than 2.0, and a normalized transfer efficiency coefficient of more than 0.5 can be stably maintained over a long time.

The crystal state may be used as a criterion for judging whether the produced first to fourth porous sintered bodies are defective or not. Thus, the porous sintered body having a crystal state other than the spherical, clumped, or complex crystal state may be judged as defective. The crystal state can be observed using an SEM.

A method for producing the first to fourth porous sintered bodies will be described below in terms of an example of the first porous sintered body.

First a powder of the fused quartz or fused silicic acid is prepared as a starting material $SiO_2$ powder. As

described above, the starting material powder has an average particle diameter of 0.2 to 7.5 μm. Such a starting material powder can be readily solid-phase-reacted with the additive component, so that a uniform porous sintered body having excellent properties can be easily obtained. Further, the porous sintered body can be mass-produced.

Then, a supply source powder for generating at least one of the BaO, SrO, CaO, $TiO_2$, $ZrO_2$, $Na_2O$, and $K_2O$ components is added to the above powder. For example, the supply source for the CaO component may be CaO or $CaCO_3$. The supply source may be a substance that is decomposed to generate the BaO component, the SrO component, etc. Specifically, the supply source may be a carbonate, an oxalate, a nitrate, an alkoxide, etc. In either case, the total amount of the BaO, SrO, CaO, $TiO_2$, $ZrO_2$, $Na_2O$, and $K_2O$ components is controlled at 0.05 to 10 parts by weight, per 100 parts by weight of the starting material powder of the fused quartz or fused silicic acid.

Thus obtained mixed powder is calcined at 800°C to 1280°C. By carrying out the calcination treatment, the solid-phase reaction between the additive component and the fused quartz or fused silicic acid proceeds slightly, whereby the final product of the first porous sintered body (the electroosmotic material 28) can have excellent chemical stability and mechanical strength and exhibit electroosmotic properties. When the calcination temperature is lower than 800°C, the resultant calcine is poor in uniformity. On the other hand, when the calcination temperature is higher than 1280°C, the solid-phase reaction excessively proceeds to harden the calcine, whereby it is difficult to milling the calcine in the following step. In addition, many steps are required after the forming step, it is difficult to control the porosity and the pore diameter, and the electroosmotic properties are deteriorated.

The above calcine is then milled to an average particle diameter of 0.1 to 8.5 μm. When the average particle diameter is less than 0.1 μm, in the following forming step, a formed shape is easily cracked, distorted, or split. On the other hand, when the average particle diameter is more than 8.5 μm, the pore diameter of the first porous sintered body is remarkably increased to lower the mechanical strength.

In other words, by controlling the average particle diameter of the calcined powder within the above range in the step of milling the calcine, the shape can be prevented from being cracked, distorted, or split in the forming step, so that the shape can have a complicated shape depending on the desired use. In addition, the first porous sintered body can have stable properties including the mechanical strength after the sintering step.

Then, after a binder such as an organic binder is added to the calcined powder, the obtained mixture is formed to obtain the shape. In this step, since the calcined powder has an average particle diameter within the above range, the shape can be prevented from being cracked, distorted, or split. Furthermore, the shape can be relatively easily obtained even in the case of forming a complicated shape.

The shape is sintered at 1000°C to 1350°C. By using this temperature range, the porosity and the pore diameter can be easily controlled, and the resultant porous sintered body can exhibit significantly stable properties. When the sintering temperature is lower than 1000°C, the porous sintered body is nonuniform and hardly has the spherical, clumped, or complex crystal state. Further, it is difficult to control the porosity and the pore diameter within predetermined ranges. On the other hand, when the sintering temperature is higher than 1350°C, the mechanical strength and the other properties of the porous sintered body are deteriorated.

Different crystal states have different properties. Thus, by changing the crystal state, the properties of the porous sintered body can be desirably controlled. The crystal state can be changed by selecting the sintering temperature.

The second to fourth porous sintered bodies can be produced in accordance with the method of producing the first porous sintered body. Thus, the second porous sintered body may be produced by adding 0.05 to 10 parts by weight of a powder containing at least one component selected from the group consisting of the natural minerals containing an aluminum silicate salt, $BaSiO_3$, $BaTiO_3$, $BaZrO_3$, $SrSiO_3$, and SiC to 100 parts by weight of the starting material powder of the fused quartz or fused silicic acid, and by carrying out the above steps. The third porous sintered body may be produced by adding 0.05 to 10 parts by weight in total of at least one component selected from the group consisting of BaO, SrO, CaO, $TiO_2$, $ZrO_2$, $Na_2O$, and $K_2O$ components to 100 parts by weight of the starting material powder containing the fused quartz or fused silicic acid and the fused alumina, and by carrying out the above steps. The fourth porous sintered body may be produced by adding 0.05 to 10 parts by weight of a powder containing at least one component selected from the group consisting of the natural minerals containing an aluminum silicate salt, $BaSiO_3$, $BaTiO_3$, $BaZrO_3$, $SrSiO_3$, and SiC to 100 parts by weight of the starting material powder containing the fused quartz or fused silicic acid and the fused alumina, and by carrying out the above steps.

The fused alumina powder used for producing the third and fourth porous sintered bodies has an average particle diameter of 0.3 to 10 μm. In the starting material powder, the ratio of the fused quartz powder or fused silicic acid powder is 65 to 99.8 mol%, and the ratio of the fused alumina powder is 35 to 0.2 mol%.

Thus produced first to fourth porous sintered bodies (the electroosmotic materials 28) have an average porosity of 25% to 52% and an average pore diameter of 0.1 to 8 μm.

For example, both the height and the diameter of the electroosmotic material 28 may be 3 mm. In this case, the electroosmotic flow pump 10 may have a height of 13 mm in a preferred example. In this example, the pump body 24 has a height of 11 mm, and the protrusion 35 has a height of 2 mm. Further, the pump body 24 has an outer diameter of 6 mm, and the protrusion 35 has an outer diameter of 2 mm. The reservoir 26 has an inner diameter of 4 mm, and the outlet 34 has a diameter of 0.5 mm.

The above sizes are considered to be illustrative and not restrictive, and may be appropriately changed depending on the type of the pump system 12.

The pump system 12 is driven as described below.

First, the liquid 38 is supplied from outside to the reservoir 26 of each electroosmotic flow pump 10, so that the reservoir 26 is filled with the liquid 38. In this case, the liquid 38 contained in the reservoir 26 reaches the upstream side (the first electrode 30 side) of the electroosmotic material 28 due to the own weight of the liquid 38 or capillarity. Then the liquid 38 penetrates the inside of the electroosmotic material 28 and reaches the downstream side (the second electrode 32 side) of the electroosmotic material 28 due to the capillarity of the material, without applying a voltage between the first electrode 30 and the second electrode 32.

The electroosmotic material 28 contains the first to fourth porous sintered bodies having a large number of pores as described above. Therefore, when the first electrode 30 side of the electroosmotic material 28 is wetted by the liquid 38, the liquid 38 penetrates the inside of the electroosmotic material 28 due to the own weight. Finally the second electrode 32 side is wetted by the liquid 38. Thus, when the reservoir 26 is filled with the liquid 38, the electroosmotic material 28 automatically absorbs the liquid 38 due to the self-filling capillarity property. As a result, the liquid 38 can be driven due to the electroosmotic phenomenon by applying a voltage V between the first electrode 30 and the second electrode 32.

A voltage is applied between the first electrode 30 and the second electrode 32 by the power source (not shown). Then, the liquid 38 in the electroosmotic material 28 and the reservoir 26 is transferred toward the downstream due to the electroosmotic phenomenon, and is supplied through the outlet 34 to the second flow channel 18. Thus, an electroosmotic flow is generated.

As a result, the liquid 38 can be introduced to the second flow channel 18 in the microfluidic chip 14. In this case, when the liquid 38 is transferred from the second electrode 32 toward the second flow channel 18, a gas 42 presses a liquid 40 in the second flow channel 18 due to the pressing force of the liquid 38, whereby the liquid 40 can be transferred to a desired position.

The liquid 38 can be transferred toward the left of the second flow channel 18 and suctioned from the second flow channel 18 into the electroosmotic flow pump 10 by applying a voltage with a polarity opposite to the above between the first electrode 30 and the second electrode 32.

The pump property of the electroosmotic flow pump 10 may be evaluated using the maximum pressure and the maximum flow rate, i.e. the back pressure at the flow rate of 0 and the flow rate at the back pressure of 0. However, the maximum flow rate and the maximum pressure are changed not only by changing the composition of the electroosmotic material 28, but also by changing the size of the electroosmotic flow pump 10, the driving voltage, etc. even in the case of using the same composition. Thus, it is not appropriate that the maximum flow rate and the maximum pressure are used as indexes for indicating inherent properties of the electroosmotic material 28 per se. In this embodiment, an evaluation method proposed by the inventor is used to evaluate the properties of the electroosmotic material 28 per se.

Specifically, a normalized flow rate $Q_s$, a normalized pressure $P_s$, a normalized pump current $I_s$, and a transfer efficiency coefficient $\varepsilon_s$ defined by the following equations (1) to (4) are used.

$$\text{Normalized flow rate } Q_s : \quad Q_s = \frac{L}{AV} Q_{max} \quad \cdots (1)$$

$$\text{Normalized pressure } P_s : \quad P_s = \frac{P_{max}}{V} \quad \cdots (2)$$

$$\text{Normalized pump current } I_s : \quad I_s = \frac{L}{AV} I_{pump} \quad \cdots (3)$$

Transfer efficiency coefficient $\varepsilon_s$:   $\varepsilon_s = \dfrac{Q_s}{I_s} P_s$ ... (4)

In the equations (1) to (4), A is the cross-sectional area of the portion through which the liquid is transferred in the electroosmotic material, L is the thickness of the electroosmotic material (the distance between the electrodes), V is the driving voltage (the voltage between the electrodes), $Q_{max}$ is the maximum flow rate of the electroosmotic flow pump, $P_{max}$ is the maximum pressure of the electroosmotic flow pump, and $I_{pump}$ is the current of the electroosmotic flow pump.

The normalized flow rate $Q_s$ represented by the equation (1) is a flow rate per a unit electric field strength and a unit cross-sectional area. In a case where different compositions are used for producing the electroosmotic materials 28 having the same shape and electric field strength, the composition exhibiting a higher normalized flow rate $Q_s$ has a larger effect of increasing the flow rate. By using the composition having the larger effect, a cross-sectional flow channel area can be reduced to obtain a certain flow rate at a certain thickness of the electroosmotic material 28. L/V in the equation (1) is the inverse of the electric field strength (V/L).

As the thickness L of the electroosmotic material 28 is reduced, the flow rate can be increased. However, the strength is lowered when the thickness L is excessively reduced. Thus, the thickness L is preferably at least approximately 0.5 mm.

The normalized pressure $P_s$ represented by the equation (2) is a maximum pump pressure per a unit driving voltage. The higher the normalized pressure $P_s$ is, the higher the maximum pressure at a certain driving voltage is.

The normalized pump current $I_s$ represented by the equation (3) is a pump current per a unit electric field strength and a unit cross-sectional area.

The larger the transfer efficiency coefficient $\varepsilon_s$ defined by the equation (4) is, the higher the pump efficiency is. The pump efficiency is a ratio between the mechanical work of the pump and the energy required therefor. Generally, the pump exhibits the highest efficiency when driven under conditions of $Q = 1/2Q_{max}$ and $P = 1/2P_{max}$. The pump efficiency $\eta$ under the conditions can be obtained using the following equation (5).

$$\eta = \frac{Q_{max} P_{max}}{4IV} = \frac{Q_s}{4I_s} P_s = \frac{1}{4} \varepsilon_s \quad \text{... (5)}$$

It is clear from the equations (4) and (5) that the transfer efficiency coefficient $\varepsilon_s$ corresponds to 1/4 of the highest efficiency of the electroosmotic material 28 used. When the units of the flow rate, current, and pressure are $\mu$L/min, $\mu$A, and kPa, the relation between $\eta$ and $\varepsilon_s$ is represented by the following equation (6).

$$\eta = \frac{25}{60} \varepsilon_s \quad [\%] \quad \text{... (6)}$$

The meaning of the transfer efficiency coefficient $\varepsilon_s$ will be described in more detail below in terms of an example where the electroosmotic flow pump 10 is used for a fuel cell.

When 1 mol of methanol is used in a cell reaction, an energy of 698.2 kJ/mol is obtained. Thus, transfer of 1 mol of methanol means that an available energy corresponding to the above energy is transported. When a methanol transfer efficiency $\eta_m$ is defined as a ratio of the transported available energy to an energy required for the transport, a methanol flow at 1 $\mu$L/min corresponds to 0.288 W, and the methanol transfer efficiency $\eta_m$ can be obtained using the following equation (7).

$$\eta_m = \frac{Qw}{IV} \quad \cdots (7)$$

In the equation (7), w is an energy transport density of 0.288 [w/($\mu$L/min)], Q is a pump flow rate [$\mu$L/min], I is a pump current [A], and V is a driving voltage [V].

For example, when Q is 100 $\mu$L/min, V is 20 V, and I is 0.2 mA, the methanol transfer efficiency $\eta_m$ obtained by the equation (7) is $7.2 \times 10^3$. This means that the energy consumed in the transport is 1/7200 of the transported amount. The porous sintered body has to show a sufficient value of the methanol transfer efficiency $\eta_m$ for the purpose of appropriately using the porous sintered body as the electroosmotic material 28 of the electroosmotic flow pump 10.

In a case where the pump is driven at the back pressure of 0 to transfer methanol, a transfer efficiency coefficient $\varepsilon_s$ required for obtaining a certain methanol transfer efficiency $\eta_m$ is obtained using the following equation (8) based on the equation (7).

$$\varepsilon_s = \eta \frac{P_{max}}{w} \quad \cdots (8)$$

The unit of $P_{max}$ is kPa, and w is $2.88 \times 10^5$ [$\mu$w/$\mu$L/min].

The porous sintered body having a higher normalized flow rate $Q_s$, a higher normalized pressure $P_s$, and a larger transfer efficiency coefficient $\varepsilon_s$ can produce the electroosmotic flow pump 10 having higher flow rate, pressure, and efficiency with a certain size and shape. In other words, by using such a porous sintered body, the electroosmotic flow pump 10 can be further miniaturized with the same flow rate.

The normalized flow rate $Q_s$, the normalized pressure $P_s$, and the transfer efficiency coefficient $\varepsilon_s$ are indexes defined depending on the combination of the electroosmotic material 28 and the liquid transferred therein.

For example, in a fuel cell for a portable electronic device, it is preferred that the size of the liquid driving pump is 10 mm or less, the cross-sectional area of the flow channel (the electroosmotic material 28) is 100 mm² or less, the flow rate is approximately 500 $\mu$L/min, the pressure characteristic is approximately 50 kPa, and the driving voltage is approximately 24 V as described above. In this case, the electroosmotic material 28 for transferring methanol preferably has the following properties.

Normalized flow rate $Q_s$:

$Q_s \geq$ 500 $\mu$L/min/100 mm²/(24 V/0.5 mm) = 0.104 [$\mu$L/min/mm/V]

Normalized pressure Ps:

$P_s \geq$ 50 kPa/24 V = 2.08 [kPa/V]

Transfer efficiency coefficient $\varepsilon_s$:

$\varepsilon_s \geq 3000/\{2.88 \times 10^5 (\mu\text{A·V})/(\mu\text{L/min})\} \times 50$ kPa = 0.5 [(kPa/V)/($\mu$L/min/$\mu$A)]

Thus, in the case of transferring methanol, the porous sintered body satisfying all the conditions of the normalized flow rate > 0.1, the normalized pressure > 2, and the transfer efficiency coefficient > 0.5 is preferred as the electroosmotic material 28.

Conventional porous sintered $SiO_2$ bodies, which have been widely used as electroosmotic material, cannot satisfy all the three conditions, and an electroosmotic flow pump using the material is highly restricted in the design possibility. In contrast, the first to fourth porous sintered bodies according to this embodiment satisfy all the above three conditions. Furthermore, the first to fourth porous sintered bodies have a higher strength and more excellent long-term durability as compared with the porous sintered $SiO_2$ bodies.

Accordingly, the electroosmotic flow pump 10, which has an excellent efficiency even with a small size, is capable of driving the liquid at a high flow rate and a high pressure, and further has a sufficient long-term durability, can be obtained by using the first to fourth porous sintered bodies as the electroosmotic material 28.

As described above, the properties of the electroosmotic material 28 generating the electroosmotic flow can be evaluated using the normalized flow rate coefficient, the normalized pressure coefficient, the normalized transfer efficiency coefficient, etc. The normalized flow rate coefficient, the normalized pressure coefficient, and the normalized transfer efficiency coefficient required depend on the liquid to be transferred. Thus, the normalized flow rate coefficient, the normalized pressure coefficient, and the normalized transfer efficiency coefficient may be satisfactory values necessary for each liquid to be driven.

The electroosmotic material 28 (the porous sintered body) has a so-called three-dimensional network structure, and wherein a plurality of pores intersecting each other are connected from one surface to the other surface. Therefore, the design possibility for the maximum flow rate and the maximum pressure can be increased by controlling the shape, the number density, the porosity, or the like of the pores, or by changing the shape, the size (such as the cross-sectional area in the direction perpendicular to the transfer direction, or the thickness in the transfer direction), or the like of the electroosmotic material 28. In qualitative terms, parameters for changing the pump property include the microstructure, the driving voltage, and the composition of the electroosmotic material 28, and the porosity, the pore diameter, and the shape of the porous sintered body.

The design possibility is further increased in the case of using the first to fourth porous sintered bodies. This is because the first to fourth porous sintered bodies are excellent in various properties as described above.

Though the electroosmotic flow pump 10 is exemplified in the above embodiment, the electroosmotic flow pump, to which the electroosmotic material 28 is attached, is not limited thereto. The electroosmotic material 28 according to the embodiment can be used in an electroosmotic flow pump with any structure.

Example 1

Powders of a fused quartz (transparent) or a fused silicic acid (opaque) having purity of 99% or more were selected as starting material $SiO_2$ powders. The powders had average particle diameters of less than 0.2 $\mu$m, 0.2 to 0.7 $\mu$m, 0.7 to 1.5 $\mu$m, 1.5 to 3.0 $\mu$m, 3.0 to 7.0 $\mu$m, and more than 7.5 $\mu$m, respectively.

Meanwhile, additive powders of $BaCO_3$ (a BaO component source), $SrCO_3$ (an SrO component source), $CaCO_3$ (a CaO component source), $TiO_2$, $ZrO_2$, $Na_2O$, and $K_2O$, having purity of 99% or more, were prepared respectively. Each additive powder had an average particle diameter of 0.05 to 2.5 $\mu$m.

The $SiO_2$ powder and the additive powder were ball-mill-mixed for 12 hours in a 300-cc urethane-lined pot mill using a solvent of pure water or methanol and high-purity $ZrO_2$ balls having diameters of 5 to 12 mm. Then, the mixed powder was dried at 120°C.

The dried powder was milled in an alumina mortar, placed in a high-purity alumina crucible, and calcined at 750°C to 1250°C, to obtain a calcine. The calcine was crashed for 12 hours by using the above pot mill and high-purity $ZrO_2$ balls to obtain a calcined powder. As a result of X-ray diffraction measurement of the calcined powder, generation of a solid solution compound was confirmed.

The particles of the calcined powder were classified according to average particle diameter of less than 0.1 $\mu$m, 0.1 to 1.0 $\mu$m, 1.0 to 3.0 $\mu$m, 3.0 to 8.5 $\mu$m, or more than 8.5 $\mu$m by a precipitation separation method.

8 parts by weight of a 5% aqueous polyvinyl alcohol (PVA) solution was added to each calcined powder, and the resultant mixture was stirred and uniformized in a mortar. The mixture was filtered using a #320 screen, and formed at a pressure of 1 ton/cm$^2$ to produce a disc shape having a diameter of 12 mm and a thickness of 3 mm. Meanwhile, also a rectangular solid shape having a thickness of 3 mm, a width of 5 mm, and a length of 25 mm was produced as a sample for mechanical strength measurement. Each of the disc shape and the rectangular solid shape was placed on a high-purity alumina plate, and left at 980°C to 1380°C for about 2 hours in an electric furnace having a cantal heater, to produce a first porous sintered body having a disc or rectangular solid shape.

The porosity, pore diameter, mechanical strength, crystal state, and the like of the produced first porous sintered body were measured and observed. The porosity was obtained using the following equation (9).

$$\text{Porosity [\%] = (1 - bulk density/apparent density)} \times 100 \; \dots \; (9)$$

In the equation (9), the units of the bulk density and the apparent density are, for example, g/cm$^3$ and g/cc.

The pore diameter was obtained by a mercury intrusion method, the mechanical strength was obtained by using a transverse tester manufactured by Shimadzu Corporation, and the crystal state was evaluated by SEM observation.

A Pt electrode was formed on each surface of the disc-shaped first porous sintered body by a sputtering method to evaluate the electroosmotic properties of the first porous sintered body. A Pt wire having a diameter of 0.1 mm was formed on each surface as a measurement lead terminal, to form an electroosmotic flow pump.

Methanol was supplied to the electroosmotic flow pump to generate an electroosmotic flow, the maximum flow rate, the maximum pressure, and the current of the electroosmotic flow pump were measured, and the normalized flow rate coefficient, the normalized pressure coefficient, and the transfer efficiency coefficient were obtained as function indexes of the electroosmotic material based on the above equations (1) to (4). In the following Examples, the normalized flow rate coefficient, the normalized pressure coefficient, and the transfer efficiency coefficient for methanol were calculated in the same manner.

For comparison, a porous sintered body was produced in the same manner as above except for using only the $SiO_2$ powder. Further, a porous sintered body was produced using a mixed powder containing the additive powder in an amount of more than 10 parts by weight. Also the porous sintered bodies were subjected to the measurement of porosity, pore diameter, mechanical strength, crystal state, and electroosmotic function indexes (the normalized flow rate coefficient, normalized pressure coefficient, and transfer efficiency coefficient for methanol).

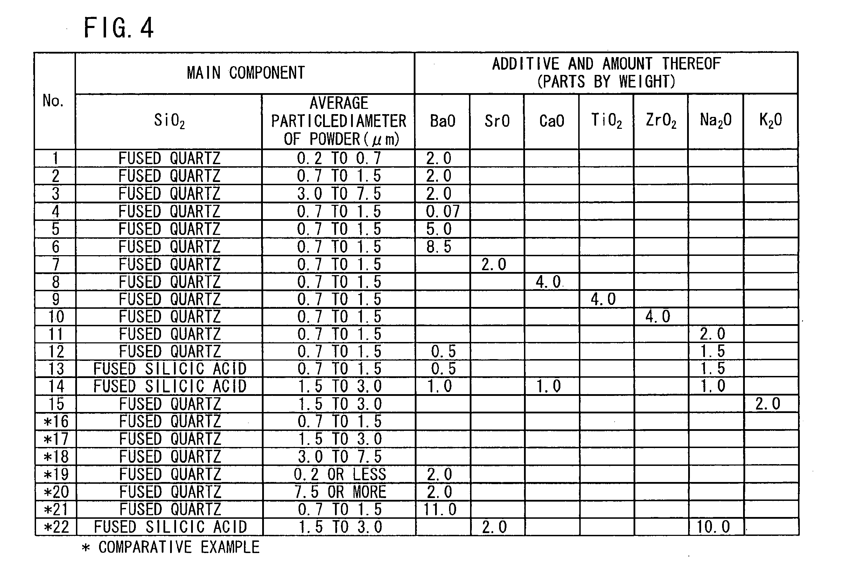

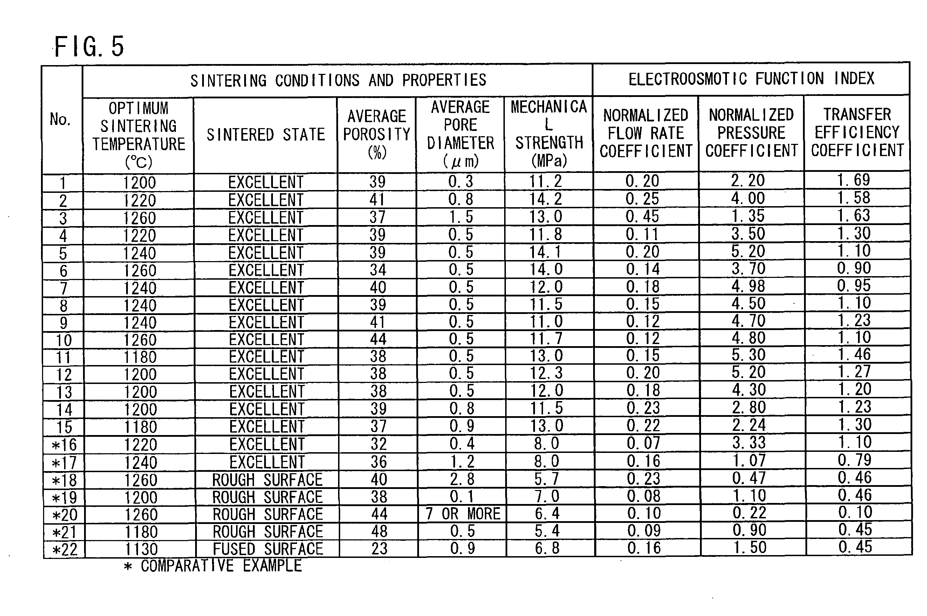

The results are shown in FIGS. 4 and 5 together with the additive powder ratios and the production conditions. As is clear from FIGS. 4 and 5, the porous sintered body, which has a porosity and a pore diameter suitable for use as the electroosmotic material, is excellent in mechanical strength, and satisfies the required electroosmotic property conditions, can be produced by using the $SiO_2$ powder having an average particle diameter of 0.2 to 7.5 $\mu$m as the starting material and by adding 0.05 to 10 parts by weight of the above additive component thereto.

The porous sintered body satisfying the conditions of the flow rate coefficient > 0.1, the pressure coefficient > 2.0, and the transfer efficiency coefficient > 0.5 has extremely excellent electroosmotic properties. Particularly the first porous sintered body No. 2 had a high mechanical strength of 14.2 MPa and excellent properties including a flow rate coefficient of 0.25, a pressure coefficient of 4.0, and a transfer efficiency coefficient of 1.58.

The optimum sintering temperature shown in FIG. 4 means a sintering temperature at which the resultant porous sintered body exhibits most desirable properties in comprehensive evaluation of physical properties such as shrinkage, sintered state (crystal state), and density.

Example 2

Powders of an alkali feldspar ($Na_2O \cdot Al_2O_3 \cdot 6SiO_2$), a kaolinite ($Al_2O_3 \cdot 2SiO_2 \cdot 2H_2O$), and a petalite ($Li_2O \cdot Al_2O_3 \cdot 8SiO_2$), each having an average particle diameter of 0.1 to 4.0 $\mu$m, were selected as natural mineral powders.

Meanwhile, solid solution compounds of $BaSiO_3$, $BaTiO_3$, $BaZrO_3$, and $SrSiO_3$ were obtained from powders of $BaCO_3$, $TiO_2$, $SiO_2$, $ZrO_2$, and $SrCO_3$ each having a purity of 99% or more and an average particle diameter of 0.05 to 2.5 $\mu$m.

A commercially available SiC was prepared.

Second porous sintered bodies were produced in the same manner as above except for using the alkali feldspar, kaolinite, petalite, $BaSiO_3$, $BaTiO_3$, $BaZrO_3$, $SrSiO_3$, and SiC as additive powders. For comparison, a porous sintered body was produced using a mixed powder containing the additive powder in an amount of more than 10 parts by weight. The porous sintered bodies were subjected to the measurement of porosity, pore diameter, mechanical strength, crystal state, and electroosmotic function indexes (the normalized flow rate coefficient, normalized pressure coefficient, and transfer efficiency coefficient).

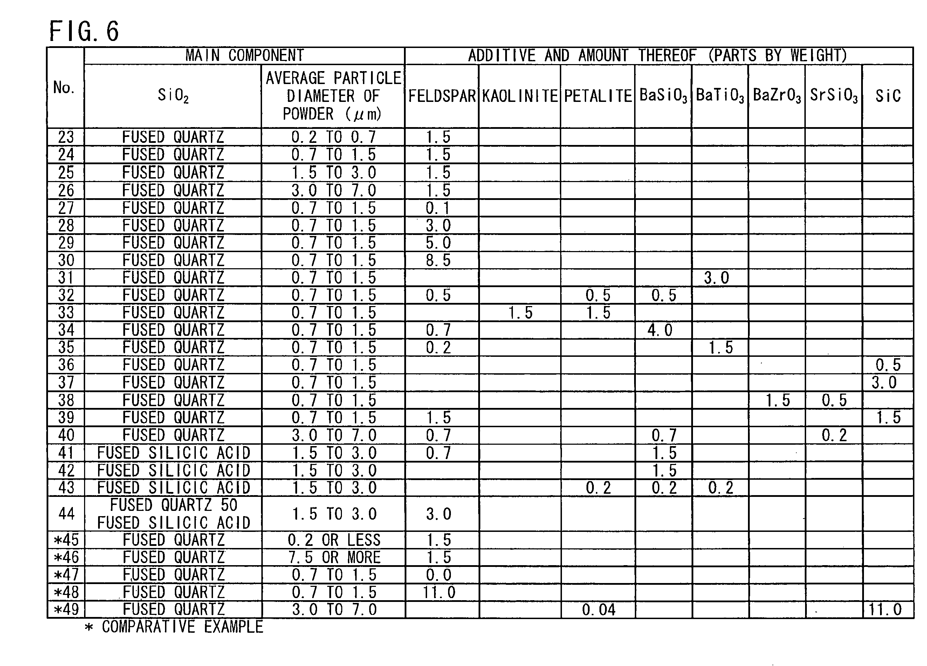

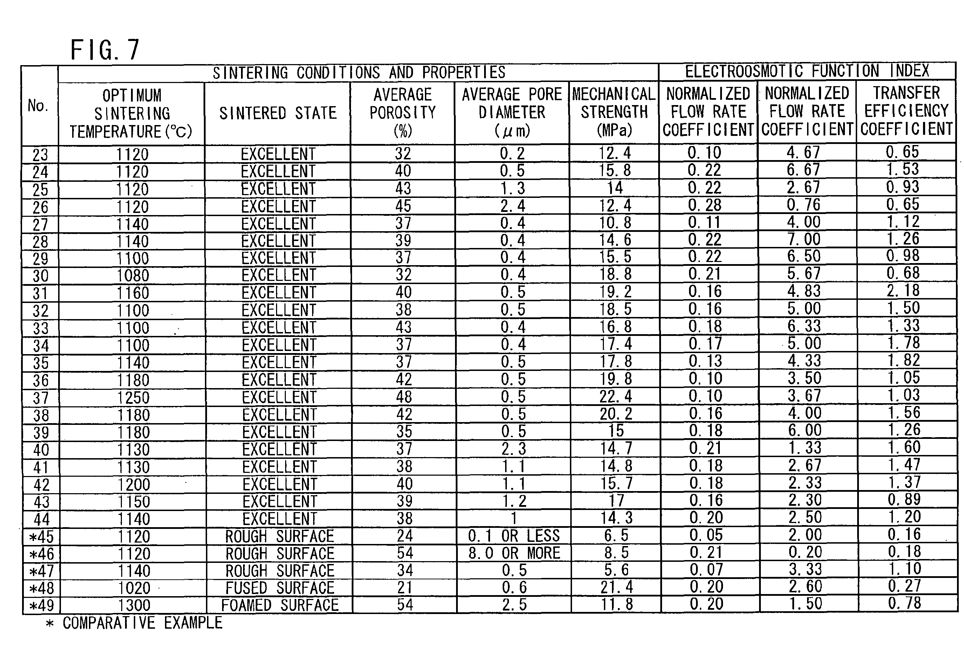

The results are shown in FIGS. 6 and 7 together with the additive powder ratios and the production conditions. As is clear from FIGS. 6 and 7, the porous sintered body, which has suitable porosity and pore diameter, is excellent in mechanical strength, and satisfies the required electroosmotic property conditions, can be produced also in the case of using the natural mineral containing an aluminum silicate salt, $BaSiO_3$, $BaTiO_3$, $BaZrO_3$, $SrSiO_3$, or SiC as the additive component.

Particularly the second porous sintered body No. 34, doped with the alkali feldspar and $BaSiO_3$, was more remarkably excellent in the electroosmotic function indexes than the simple sintered $SiO_2$ body.

Example 3

Six powders of a fused alumina ($\alpha$-Corundum) having purity of 99% or more were selected as starting material $Al_2O_3$ powders. The powders had average particle diameters of less than 0.3 $\mu$m, 0.3 to 1.5 $\mu$m, 1.5 to 5.0 $\mu$m, 5.0 to 8.0 $\mu$m, 8.0 to 10.0 $\mu$m, and more than 10.0 $\mu$m, respectively.

The starting material $Al_2O_3$ powder was mixed with the above starting material $SiO_2$ powder at a predetermined ratio. Further, the above powder of $BaCO_3$, $SrCO_3$, $CaCO_3$, $TiO_2$, $ZrO_2$, $Na_2O$, or $K_2O$ was added to the $SiO_2$-$Al_2O_3$ powder, to obtain a mixed powder.

Then, third porous sintered bodies were produced in the same manner as above. For comparison, a porous sintered body was produced using a mixed powder containing the additive powder in an amount of more than 10 parts by weight. The porous sintered bodies were subjected to the measurement of porosity, pore diameter, mechanical strength, crystal state, and electroosmotic function indexes (the normalized flow rate coefficient, normalized pressure coefficient, and transfer efficiency coefficient).

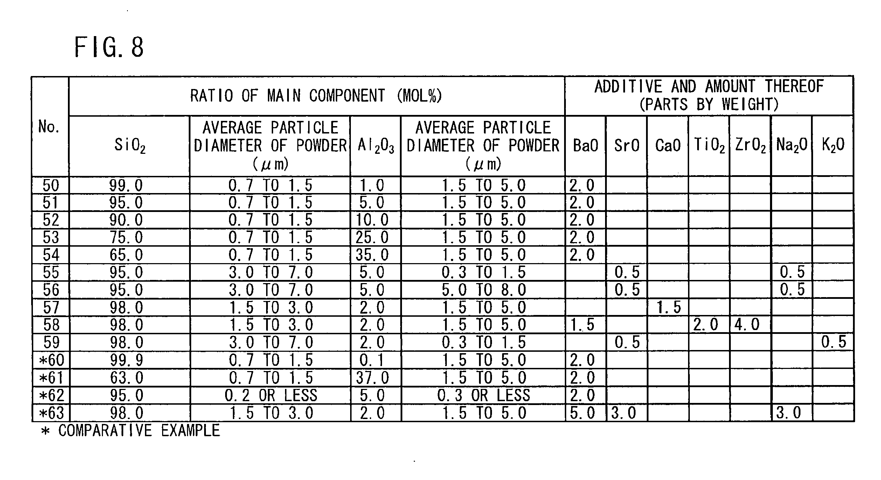

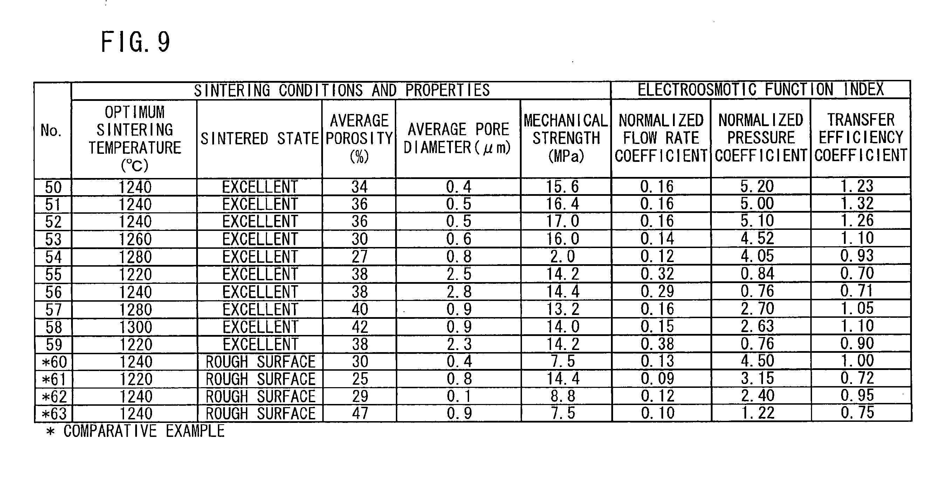

The results are shown in FIGS. 8 and 9 together with the additive powder ratios and the production conditions. As is clear from FIGS. 8 and 9, the porous sintered body, which has suitable porosity and pore diameter, is excellent in mechanical strength, and satisfies the required electroosmotic property conditions, can be produced also in the case of using the $SiO_2$-$Al_2O_3$ as a matrix.

Particularly the third porous sintered body No. 52, containing 90 mol% of $SiO_2$ and 10 mol% of $Al_2O_3$, had a

high mechanical strength of 17 MPa and excellent properties including a flow rate coefficient of 0.16, a pressure coefficient of 5.1, and a transfer efficiency coefficient of 1.26.

Electroosmotic flow pumps containing the third porous sintered bodies as electroosmotic material maintained approximately constant properties for a solution of an alcohol (particularly methanol) for a long time. Thus, the pumps hardly exhibited changes (deterioration) with time.

Example 4

Fourth porous sintered bodies were produced in the same manner as above using the starting material $SiO_2$ powder, the starting material $Al_2O_3$ powder, and the additive powders of alkali feldspar, kaolinite, petalite, $BaSiO_3$, $BaTiO_3$, $BaZrO_3$, $SrSiO_3$, and SiC. For comparison, a porous sintered body was produced using a mixed powder containing the additive powder in an amount of more than 10 parts by weight. The porous sintered bodies were subjected to the measurement of porosity, pore diameter, mechanical strength, crystal state, and electroosmotic function indexes (the normalized flow rate coefficient, normalized pressure coefficient, and transfer efficiency coefficient).

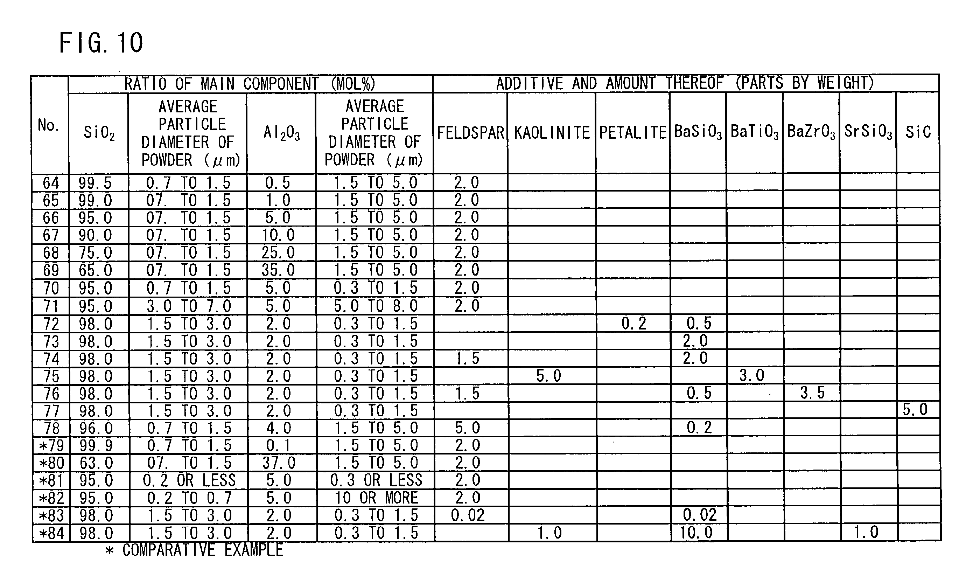

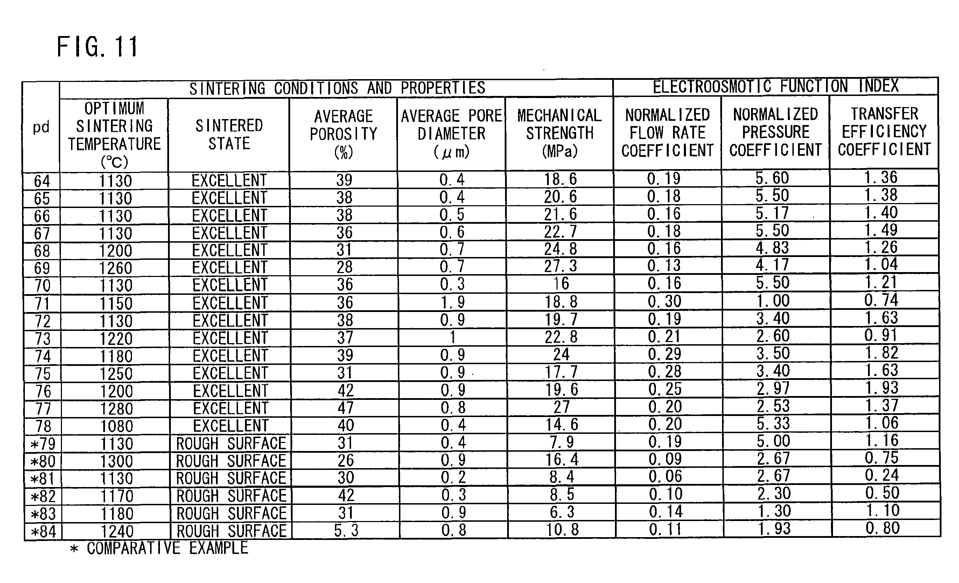

The results are shown in FIGS. 10 and 11 together with the additive powder ratios and the production conditions. As is clear from FIGS. 10 and 11, also the fourth porous sintered body is preferred as the electroosmotic material.

Particularly the fourth porous sintered body No. 74, doped with 1.5 parts by weight of the alkali feldspar and 2.0 parts by weight of $BaSiO_3$, had a high mechanical strength of 24 MPa and excellent properties including a flow rate coefficient of 0.29, a pressure coefficient of 3.5, and a transfer efficiency coefficient of 1.82.

The fourth porous sintered body No. 77, doped with 5.0 parts by weight of SiC, had a remarkably high mechanical strength of 27 MPa. Such a porous sintered body is useful for producing an electroosmotic material with a small thickness.

Electroosmotic flow pumps containing the fourth porous sintered bodies maintained approximately constant properties for a solution of an alcohol (particularly methanol) for a long time, as well as the pumps containing the third porous sintered bodies.

Example 5

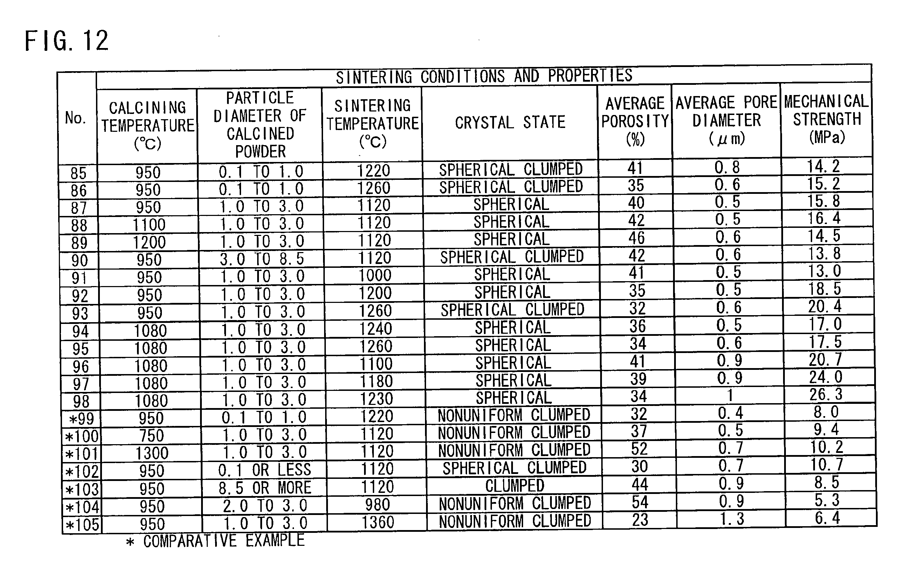

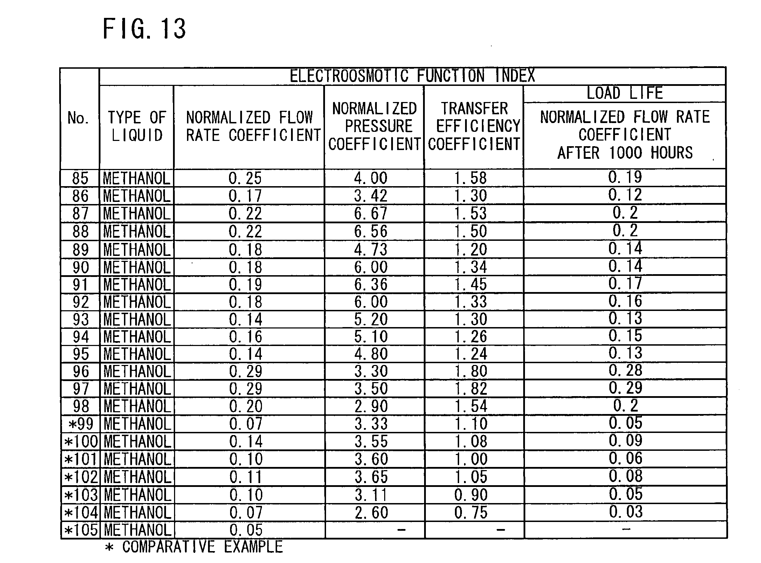

The relations of various properties with the calcining temperature for converting the mixed powder to the calcine, the average particle diameter of the calcined powder prepared by milling the calcine, the sintering temperature, and the crystal state of the porous sintered body are shown in FIGS. 12 and 13.

In Nos. 85 and 86, the calcining temperature was 950°C, the calcined powder had an average particle diameter of 0.1 to 1.0 $\mu$m, and the sintering temperature was 1220°C to 1260°C. The resultant porous sintered bodies were in a spherical clumped crystal state, and had properties and electroosmotic function indexes sufficient for use as electroosmotic materials.

In Nos. 87 to 89, the calcining temperature was 750°C to 1220°C, the calcined powder had an average particle diameter of 1.0 to 3.0 $\mu$m, and the sintering temperature was 1120°C.

As the calcining temperature was increased, the average porosity was increased. The average pore diameter was an approximately constant value of 0.5 to 0.6 $\mu$m. The resultant porous sintered bodies were in a spherical clumped crystal state, and had satisfactory properties, mechanical strength, and function indexes. Further, they had a long operating life.

In Nos. 90 and 101 to 103, porous sintered bodies were produced using different average particle diameters of the calcined powders at a constant calcining temperature of 950°C. Among them, in No. 90, the porous sintered body was in a spherical clumped crystal state, and was excellent in physical properties, mechanical strength, and function indexes.

In Nos. 91 to 93, 104, and 105, porous sintered bodies were produced by calcining at a calcining temperature of 950°C using a calcined powder having an average particle diameter of 1.0 to 3.0 $\mu$m and sintering at different sintering temperatures of 980°C to 1360°C. In the examples, as the sintering temperature was increased, the average porosity was reduced. The average pore diameter was an approximately constant value of 0.3 to 0.6 $\mu$m. The porous sintered bodies were in a spherical clumped crystal state, and had excellent properties, mechanical strength, and function indexes. Further, they had a long operating life.

In Nos. 94 and 95, 2.0 parts by weight of the BaO component was added to 100 parts by weight of the $SiO_2$-$Al_2O_3$ matrix. The resultant porous sintered bodies were in a spherical crystal state, and each had an average porosity and an average pore diameter suitable for use as an electroosmotic material. The porous sintered bodies were excellent in physical properties, mechanical strength, and function indexes.

In Nos. 96 to 98, 1.5 parts by weight of the alkali feldspar and 2.0 parts by weight of $BaSiO_3$ were added to 100 parts by weight of the $SiO_2$-$Al_2O_3$ matrix. Also in the examples, each resultant porous sintered body had an average porosity and an average pore diameter suitable for use as an electroosmotic material. The porous sintered bodies were in a spherical crystal state, and were excellent in physical properties, mechanical strength, and function indexes.

Electroosmotic flow pumps containing the third porous sintered bodies Nos. 94 to 98 as electroosmotic material each maintained an approximately constant flow rate coefficient for a long time even in the case of generating an electroosmotic flow using a solution of an alcohol (particularly methanol). Thus, the pumps were hardly deteriorated and had stable properties over a long time.

The first to fourth porous sintered bodies were hardly chemically or physically changed and had stable properties over a long time also in the case of generating an electroosmotic flow using water as the liquid, though not shown in the tables.

In contrast, the porous simple $SiO_2$ body No. 99, the porous sintered bodies Nos. 100 and 101 produced using calcining temperatures of 750°C and 1220°C, the porous sintered bodies Nos. 102 and 103 produced using calcined powders with average particle diameters of less than 0.1 $\mu$m and more than 8.5 $\mu$m, and the porous sintered body No. 105 produced using a sintering temperature of 1360°C were mostly in a nonuniform crystal state, and were poor in at least one of the properties, mechanical strength, and function indexes.

**Claims**

1.  An electroosmotic material comprising a porous sintered body of a dielectric material, wherein
    when the dielectric material is brought into contact with a liquid, a surface of the dielectric material is electrically charged,
    when a voltage is applied between a first electrode and a second electrode in an electroosmotic flow pump, the electroosmotic material generates an electroosmotic flow in a direction from the first electrode to the second electrode or a reverse direction,
    0.05 to 10 parts by weight in total of at least one component selected from the group consisting of BaO, SrO, CaO, $TiO_2$, $ZrO_2$, $Na_2O$, and $K_2O$ components is added to 100 parts by weight of a fused quartz or a fused silicic acid, and
    the fused quartz or the fused silicic acid has an average particle diameter of 0.2 to 7.5 $\mu$m.

2.  An electroosmotic material comprising a porous sintered body of a dielectric material, wherein
    when the dielectric material is brought into contact with a liquid, a surface of the dielectric material is electrically charged,
    when a voltage is applied between a first electrode and a second electrode in an electroosmotic flow pump, the electroosmotic material generates an electroosmotic flow in a direction from the first electrode to the second electrode or a reverse direction,
    0.05 to 10 parts by weight in total of at least one component selected from the group consisting of natural minerals containing an aluminum silicate salt, $BaSiO_3$, $BaTiO_3$, $BaZrO_3$, $SrSiO_3$, and SiC is added to 100 parts by weight of a fused quartz or a fused silicic acid, and
    the fused quartz or the fused silicic acid has an average particle diameter of 0.2 to 7.5 $\mu$m.

3.  An electroosmotic material according to claim 2, wherein the natural minerals include alkali feldspars, kaolinites, and petalites.

4.  An electroosmotic material comprising a porous sintered body of a dielectric material, wherein
    when the dielectric material is brought into contact with a liquid, a surface of the dielectric material is electrically charged,
    when a voltage is applied between a first electrode and a second electrode in an electroosmotic flow pump, the electroosmotic material generates an electroosmotic flow in a direction from the first electrode to the second electrode or a reverse direction,
    0.05 to 10 parts by weight in total of at least one component selected from the group consisting of BaO, SrO, CaO, $TiO_2$, $ZrO_2$, $Na_2O$, and $K_2O$ components is added to 100 parts by weight of an $SiO_2$-$Al_2O_3$, the mole ratio of a fused quartz or a fused silicic acid:a fused alumina being 65 to 99.8:35 to 0.2 in the $SiO_2$-$Al_2O_3$, and
    the fused quartz or the fused silicic acid has an average particle diameter of 0.2 to 7.5 $\mu$m, and the fused alumina has an average particle diameter of 0.3 to 10 $\mu$m.

5.  An electroosmotic material comprising a porous sintered body of a dielectric material, wherein
    when the dielectric material is brought into contact with a liquid, a surface of the dielectric material is electrically charged,
    when a voltage is applied between a first electrode and a second electrode in an electroosmotic flow pump, the electroosmotic material generates an electroosmotic flow in a direction from the first electrode to the second electrode or a reverse direction,

**EP 2 065 353 A1**

0.05 to 10 parts by weight in total of at least one component selected from the group consisting of natural minerals containing an aluminum silicate salt, $BaSiO_3$, $BaTiO_3$, $BaZrO_3$, $SrSiO_3$, and SiC is added to 100 parts by weight of an $SiO_2$-$Al_2O_3$, the mole ratio of a fused quartz or a fused silicic acid:a fused alumina being 65 to 99.8:35 to 0.2 in the $SiO_2$-$Al_2O_3$, and

the fused quartz or the fused silicic acid has an average particle diameter of 0.2 to 7.5 $\mu$m, and the fused alumina has an average particle diameter of 0.3 to 10 $\mu$m.

6. An electroosmotic material according to claim 5, wherein the natural minerals include alkali feldspars, kaolinites, and petalites.

7. An electroosmotic material according to any one of claims 1 to 6, wherein the electroosmotic material has an average porosity of 25% to 52% and an average pore diameter of 0.1 to 8 $\mu$m.

8. A method for producing an electroosmotic material, comprising the steps of:

adding 0.05 to 10 parts by weight in total of a powder containing at least one component selected from the group consisting of BaO, SrO, CaO, $TiO_2$, $ZrO_2$, $Na_2O$, and $K_2O$ components or at least one component selected from the group consisting of natural minerals containing an aluminum silicate salt, $BaSiO_3$, $BaTiO_3$, $BaZrO_3$, $SrSiO_3$, and SiC to 100 parts by weight of a fused quartz powder or a fused silicic acid powder to obtain a mixed powder;
calcining the mixed powder at 800°C to 1280°C to obtain a calcine;
milling the calcine to obtain a calcined powder having an average particle diameter of 0.1 to 8.5 $\mu$m;
adding a binder to the calcined powder, and forming the resultant mixture to obtain a shape; and
sintering the shape at 1000°C to 1350°C to obtain a porous sintered body, wherein
the fused quartz powder or the fused silicic acid powder has an average particle diameter of 0.2 to 7.5 $\mu$m.

9. A method for producing an electroosmotic material, comprising the steps of:

adding 0.05 to 10 parts by weight in total of a powder containing at least one component selected from the group consisting of BaO, SrO, CaO, $TiO_2$, $ZrO_2$, $Na_2O$, and $K_2O$ components or at least one component selected from the group consisting of natural minerals containing an aluminum silicate salt, $BaSiO_3$, $BaTiO_3$, $BaZrO_3$, $SrSiO_3$, and SiC to 100 parts by weight of an $SiO_2$-$Al_2O_3$ powder, the mole ratio of a fused quartz or a fused silicic acid:a fused alumina being 65 to 99.8:35 to 0.2 in the $SiO_2$-$Al_2O_3$ powder to obtain a mixed powder;
calcining the mixed powder at 800°C to 1280°C to obtain a calcine;
milling the calcine to obtain a calcined powder having an average particle diameter of 0.1 to 8.5 $\mu$m;
adding a binder to the calcined powder, and forming the resultant mixture to obtain a shape; and
sintering the shape at 1000°C to 1350°C to obtain a porous sintered body, wherein
the fused quartz powder or the fused silicic acid powder has an average particle diameter of 0.2 to 7.5 $\mu$m, and the fused alumina powder has an average particle diameter of 0.3 to 10 $\mu$m.

10. An electroosmotic flow pump comprising an electroosmotic material according to any one of claims 1 to 7.

18

# FIG. 1

# FIG. 2

TO POWER
SOURCE

TO POWER
SOURCE

FIG. 3

## FIG. 4

| No. | MAIN COMPONENT | | ADDITIVE AND AMOUNT THEREOF (PARTS BY WEIGHT) | | | | | | |
|---|---|---|---|---|---|---|---|---|---|
| | $SiO_2$ | AVERAGE PARTICLE DIAMETER OF POWDER ($\mu$m) | BaO | SrO | CaO | $TiO_2$ | $ZrO_2$ | $Na_2O$ | $K_2O$ |
| 1 | FUSED QUARTZ | 0.2 TO 0.7 | 2.0 | | | | | | |
| 2 | FUSED QUARTZ | 0.7 TO 1.5 | 2.0 | | | | | | |
| 3 | FUSED QUARTZ | 3.0 TO 7.5 | 2.0 | | | | | | |
| 4 | FUSED QUARTZ | 0.7 TO 1.5 | 0.07 | | | | | | |
| 5 | FUSED QUARTZ | 0.7 TO 1.5 | 5.0 | | | | | | |
| 6 | FUSED QUARTZ | 0.7 TO 1.5 | 8.5 | | | | | | |
| 7 | FUSED QUARTZ | 0.7 TO 1.5 | | 2.0 | | | | | |
| 8 | FUSED QUARTZ | 0.7 TO 1.5 | | | 4.0 | | | | |
| 9 | FUSED QUARTZ | 0.7 TO 1.5 | | | | 4.0 | | | |
| 10 | FUSED QUARTZ | 0.7 TO 1.5 | | | | | 4.0 | | |
| 11 | FUSED QUARTZ | 0.7 TO 1.5 | | | | | | 2.0 | |
| 12 | FUSED QUARTZ | 0.7 TO 1.5 | 0.5 | | | | | 1.5 | |
| 13 | FUSED SILICIC ACID | 0.7 TO 1.5 | 0.5 | | | | | 1.5 | |
| 14 | FUSED SILICIC ACID | 1.5 TO 3.0 | 1.0 | | 1.0 | | | 1.0 | |
| 15 | FUSED QUARTZ | 1.5 TO 3.0 | | | | | | | 2.0 |
| *16 | FUSED QUARTZ | 0.7 TO 1.5 | | | | | | | |
| *17 | FUSED QUARTZ | 1.5 TO 3.0 | | | | | | | |
| *18 | FUSED QUARTZ | 3.0 TO 7.5 | | | | | | | |
| *19 | FUSED QUARTZ | 0.2 OR LESS | 2.0 | | | | | | |
| *20 | FUSED QUARTZ | 7.5 OR MORE | 2.0 | | | | | | |
| *21 | FUSED QUARTZ | 0.7 TO 1.5 | 11.0 | | | | | | |
| *22 | FUSED SILICIC ACID | 1.5 TO 3.0 | | 2.0 | | | | 10.0 | |

* COMPARATIVE EXAMPLE

EP 2 065 353 A1

## FIG. 5

| No. | SINTERING CONDITIONS AND PROPERTIES | | | | | ELECTROOSMOTIC FUNCTION INDEX | | |
|---|---|---|---|---|---|---|---|---|
| | OPTIMUM SINTERING TEMPERATURE (°C) | SINTERED STATE | AVERAGE POROSITY (%) | AVERAGE PORE DIAMETER ($\mu$m) | MECHANICAL STRENGTH (MPa) | NORMALIZED FLOW RATE COEFFICIENT | NORMALIZED PRESSURE COEFFICIENT | TRANSFER EFFICIENCY COEFFICIENT |
| 1 | 1200 | EXCELLENT | 39 | 0.3 | 11.2 | 0.20 | 2.20 | 1.69 |
| 2 | 1220 | EXCELLENT | 41 | 0.8 | 14.2 | 0.25 | 4.00 | 1.58 |
| 3 | 1260 | EXCELLENT | 37 | 1.5 | 13.0 | 0.45 | 1.35 | 1.63 |
| 4 | 1220 | EXCELLENT | 39 | 0.5 | 11.8 | 0.11 | 3.50 | 1.30 |
| 5 | 1240 | EXCELLENT | 39 | 0.5 | 14.1 | 0.20 | 5.20 | 1.10 |
| 6 | 1260 | EXCELLENT | 34 | 0.5 | 14.0 | 0.14 | 3.70 | 0.90 |
| 7 | 1240 | EXCELLENT | 40 | 0.5 | 12.0 | 0.18 | 4.98 | 0.95 |
| 8 | 1240 | EXCELLENT | 39 | 0.5 | 11.5 | 0.15 | 4.50 | 1.10 |
| 9 | 1240 | EXCELLENT | 41 | 0.5 | 11.0 | 0.12 | 4.70 | 1.23 |
| 10 | 1260 | EXCELLENT | 44 | 0.5 | 11.7 | 0.12 | 4.80 | 1.10 |
| 11 | 1180 | EXCELLENT | 38 | 0.5 | 13.0 | 0.15 | 5.30 | 1.46 |
| 12 | 1200 | EXCELLENT | 38 | 0.5 | 12.3 | 0.20 | 5.20 | 1.27 |
| 13 | 1200 | EXCELLENT | 38 | 0.5 | 12.0 | 0.18 | 4.30 | 1.20 |
| 14 | 1200 | EXCELLENT | 39 | 0.8 | 11.5 | 0.23 | 2.80 | 1.23 |
| 15 | 1180 | EXCELLENT | 37 | 0.9 | 13.0 | 0.22 | 2.24 | 1.30 |
| *16 | 1220 | EXCELLENT | 32 | 0.4 | 8.0 | 0.07 | 3.33 | 1.10 |
| *17 | 1240 | EXCELLENT | 36 | 1.2 | 8.0 | 0.16 | 1.07 | 0.79 |
| *18 | 1260 | ROUGH SURFACE | 40 | 2.8 | 5.7 | 0.23 | 0.47 | 0.46 |
| *19 | 1200 | ROUGH SURFACE | 38 | 0.1 | 7.0 | 0.08 | 1.10 | 0.46 |
| *20 | 1260 | ROUGH SURFACE | 44 | 7 OR MORE | 6.4 | 0.10 | 0.22 | 0.10 |
| *21 | 1180 | ROUGH SURFACE | 48 | 0.5 | 5.4 | 0.09 | 0.90 | 0.45 |
| *22 | 1130 | FUSED SURFACE | 23 | 0.9 | 6.8 | 0.16 | 1.50 | 0.45 |

* COMPARATIVE EXAMPLE

EP 2 065 353 A1

# FIG. 6

| No. | MAIN COMPONENT | | ADDITIVE AND AMOUNT THEREOF (PARTS BY WEIGHT) | | | | | | | |
| --- | --- | --- | --- | --- | --- | --- | --- | --- | --- | --- |
| | $SiO_2$ | AVERAGE PARTICLE DIAMETER OF POWDER ($\mu$m) | FELDSPAR | KAOLINITE | PETALITE | $BaSiO_3$ | $BaTiO_3$ | $BaZrO_3$ | $SrSiO_3$ | SiC |
| 23 | FUSED QUARTZ | 0.2 TO 0.7 | 1.5 | | | | | | | |
| 24 | FUSED QUARTZ | 0.7 TO 1.5 | 1.5 | | | | | | | |
| 25 | FUSED QUARTZ | 1.5 TO 3.0 | 1.5 | | | | | | | |
| 26 | FUSED QUARTZ | 3.0 TO 7.0 | 1.5 | | | | | | | |
| 27 | FUSED QUARTZ | 0.7 TO 1.5 | 0.1 | | | | | | | |
| 28 | FUSED QUARTZ | 0.7 TO 1.5 | 3.0 | | | | | | | |
| 29 | FUSED QUARTZ | 0.7 TO 1.5 | 5.0 | | | | | | | |
| 30 | FUSED QUARTZ | 0.7 TO 1.5 | 8.5 | | | | | | | |
| 31 | FUSED QUARTZ | 0.7 TO 1.5 | | | | | 3.0 | | | |
| 32 | FUSED QUARTZ | 0.7 TO 1.5 | 0.5 | | 0.5 | 0.5 | | | | |
| 33 | FUSED QUARTZ | 0.7 TO 1.5 | | 1.5 | 1.5 | | | | | |
| 34 | FUSED QUARTZ | 0.7 TO 1.5 | 0.7 | | | 4.0 | | | | |
| 35 | FUSED QUARTZ | 0.7 TO 1.5 | 0.2 | | | | 1.5 | | | |
| 36 | FUSED QUARTZ | 0.7 TO 1.5 | | | | | | | | 0.5 |
| 37 | FUSED QUARTZ | 0.7 TO 1.5 | | | | | | | | 3.0 |
| 38 | FUSED QUARTZ | 0.7 TO 1.5 | | | | | | 1.5 | 0.5 | |
| 39 | FUSED QUARTZ | 0.7 TO 1.5 | 1.5 | | | | | | | 1.5 |
| 40 | FUSED QUARTZ | 3.0 TO 7.0 | 0.7 | | | 0.7 | | | 0.2 | |
| 41 | FUSED SILICIC ACID | 1.5 TO 3.0 | 0.7 | | | 1.5 | | | | |
| 42 | FUSED SILICIC ACID | 1.5 TO 3.0 | | | | 1.5 | | | | |
| 43 | FUSED SILICIC ACID | 1.5 TO 3.0 | | | 0.2 | 0.2 | 0.2 | | | |
| 44 | FUSED QUARTZ 50 FUSED SILICIC ACID | 1.5 TO 3.0 | 3.0 | | | | | | | |
| *45 | FUSED QUARTZ | 0.2 OR LESS | 1.5 | | | | | | | |
| *46 | FUSED QUARTZ | 7.5 OR MORE | 1.5 | | | | | | | |
| *47 | FUSED QUARTZ | 0.7 TO 1.5 | 0.0 | | | | | | | |
| *48 | FUSED QUARTZ | 0.7 TO 1.5 | 11.0 | | | | | | | |
| *49 | FUSED QUARTZ | 3.0 TO 7.0 | | | 0.04 | | | | | 11.0 |

* COMPARATIVE EXAMPLE

EP 2 065 353 A1

## FIG. 7

| No. | OPTIMUM SINTERING TEMPERATURE (°C) | SINTERED STATE | AVERAGE POROSITY (%) | AVERAGE PORE DIAMETER (μm) | MECHANICAL STRENGTH (MPa) | NORMALIZED FLOW RATE COEFFICIENT | NORMALIZED FLOW RATE COEFFICIENT | TRANSFER EFFICIENCY COEFFICIENT |
|---|---|---|---|---|---|---|---|---|
| | SINTERING CONDITIONS AND PROPERTIES | | | | | ELECTROOSMOTIC FUNCTION INDEX | | |
| 23 | 1120 | EXCELLENT | 32 | 0.2 | 12.4 | 0.10 | 4.67 | 0.65 |
| 24 | 1120 | EXCELLENT | 40 | 0.5 | 15.8 | 0.22 | 6.67 | 1.53 |
| 25 | 1120 | EXCELLENT | 43 | 1.3 | 14 | 0.22 | 2.67 | 0.93 |
| 26 | 1120 | EXCELLENT | 45 | 2.4 | 12.4 | 0.28 | 0.76 | 0.65 |
| 27 | 1140 | EXCELLENT | 37 | 0.4 | 10.8 | 0.11 | 4.00 | 1.12 |
| 28 | 1140 | EXCELLENT | 39 | 0.4 | 14.6 | 0.22 | 7.00 | 1.26 |
| 29 | 1100 | EXCELLENT | 37 | 0.4 | 15.5 | 0.22 | 6.50 | 0.98 |
| 30 | 1080 | EXCELLENT | 32 | 0.4 | 18.8 | 0.21 | 5.67 | 0.68 |
| 31 | 1160 | EXCELLENT | 40 | 0.5 | 19.2 | 0.16 | 4.83 | 2.18 |
| 32 | 1100 | EXCELLENT | 38 | 0.5 | 18.5 | 0.16 | 5.00 | 1.50 |
| 33 | 1100 | EXCELLENT | 43 | 0.4 | 16.8 | 0.18 | 6.33 | 1.33 |
| 34 | 1100 | EXCELLENT | 37 | 0.4 | 17.4 | 0.17 | 5.00 | 1.78 |
| 35 | 1140 | EXCELLENT | 37 | 0.5 | 17.8 | 0.13 | 4.33 | 1.82 |
| 36 | 1180 | EXCELLENT | 42 | 0.5 | 19.8 | 0.10 | 3.50 | 1.05 |
| 37 | 1250 | EXCELLENT | 48 | 0.5 | 22.4 | 0.10 | 3.67 | 1.03 |
| 38 | 1180 | EXCELLENT | 42 | 0.5 | 20.2 | 0.16 | 4.00 | 1.56 |
| 39 | 1180 | EXCELLENT | 35 | 0.5 | 15 | 0.18 | 6.00 | 1.26 |
| 40 | 1130 | EXCELLENT | 37 | 2.3 | 14.7 | 0.21 | 1.33 | 1.60 |
| 41 | 1130 | EXCELLENT | 38 | 1.1 | 14.8 | 0.18 | 2.67 | 1.47 |
| 42 | 1200 | EXCELLENT | 40 | 1.1 | 15.7 | 0.18 | 2.33 | 1.37 |
| 43 | 1150 | EXCELLENT | 39 | 1.2 | 17 | 0.16 | 2.30 | 0.89 |
| 44 | 1140 | EXCELLENT | 38 | 1 | 14.3 | 0.20 | 2.50 | 1.20 |
| *45 | 1120 | ROUGH SURFACE | 24 | 0.1 OR LESS | 6.5 | 0.05 | 2.00 | 0.16 |
| *46 | 1120 | ROUGH SURFACE | 54 | 8.0 OR MORE | 8.5 | 0.21 | 0.20 | 0.18 |
| *47 | 1140 | ROUGH SURFACE | 34 | 0.5 | 5.6 | 0.07 | 3.33 | 1.10 |
| *48 | 1020 | FUSED SURFACE | 21 | 0.6 | 21.4 | 0.20 | 2.60 | 0.27 |
| *49 | 1300 | FOAMED SURFACE | 54 | 2.5 | 11.8 | 0.20 | 1.50 | 0.78 |

* COMPARATIVE EXAMPLE

EP 2 065 353 A1

FIG. 8

| No. | RATIO OF MAIN COMPONENT (MOL%) | | | | ADDITIVE AND AMOUNT THEREOF (PARTS BY WEIGHT) | | | | | | |
|---|---|---|---|---|---|---|---|---|---|---|---|
| | $SiO_2$ | AVERAGE PARTICLE DIAMETER OF POWDER ($\mu$ m) | $Al_2O_3$ | AVERAGE PARTICLE DIAMETER OF POWDER ($\mu$ m) | BaO | SrO | CaO | $TiO_2$ | $ZrO_2$ | $Na_2O$ | $K_2O$ |
| 50 | 99.0 | 0.7 TO 1.5 | 1.0 | 1.5 TO 5.0 | 2.0 | | | | | | |
| 51 | 95.0 | 0.7 TO 1.5 | 5.0 | 1.5 TO 5.0 | 2.0 | | | | | | |
| 52 | 90.0 | 0.7 TO 1.5 | 10.0 | 1.5 TO 5.0 | 2.0 | | | | | | |
| 53 | 75.0 | 0.7 TO 1.5 | 25.0 | 1.5 TO 5.0 | 2.0 | | | | | | |
| 54 | 65.0 | 0.7 TO 1.5 | 35.0 | 1.5 TO 5.0 | 2.0 | | | | | | |
| 55 | 95.0 | 3.0 TO 7.0 | 5.0 | 0.3 TO 1.5 | | 0.5 | | | | 0.5 | |
| 56 | 95.0 | 3.0 TO 7.0 | 5.0 | 5.0 TO 8.0 | | 0.5 | | | | 0.5 | |
| 57 | 98.0 | 1.5 TO 3.0 | 2.0 | 1.5 TO 5.0 | | | 1.5 | | | | |
| 58 | 98.0 | 1.5 TO 3.0 | 2.0 | 1.5 TO 5.0 | 1.5 | | | 2.0 | 4.0 | | |
| 59 | 98.0 | 3.0 TO 7.0 | 2.0 | 0.3 TO 1.5 | | 0.5 | | | | | 0.5 |
| *60 | 99.9 | 0.7 TO 1.5 | 0.1 | 1.5 TO 5.0 | 2.0 | | | | | | |
| *61 | 63.0 | 0.7 TO 1.5 | 37.0 | 1.5 TO 5.0 | 2.0 | | | | | | |
| *62 | 95.0 | 0.2 OR LESS | 5.0 | 0.3 OR LESS | 2.0 | | | | | | |
| *63 | 98.0 | 1.5 TO 3.0 | 2.0 | 1.5 TO 5.0 | 5.0 | 3.0 | | | | 3.0 | |

* COMPARATIVE EXAMPLE

EP 2 065 353 A1

## FIG. 9

| No. | SINTERING CONDITIONS AND PROPERTIES | | | | | ELECTROOSMOTIC FUNCTION INDEX | | |
|---|---|---|---|---|---|---|---|---|
| | OPTIMUM SINTERING TEMPERATURE (°C) | SINTERED STATE | AVERAGE POROSITY (%) | AVERAGE PORE DIAMETER ($\mu$m) | MECHANICAL STRENGTH (MPa) | NORMALIZED FLOW RATE COEFFICIENT | NORMALIZED PRESSURE COEFFICIENT | TRANSFER EFFICIENCY COEFFICIENT |
| 50 | 1240 | EXCELLENT | 34 | 0.4 | 15.6 | 0.16 | 5.20 | 1.23 |
| 51 | 1240 | EXCELLENT | 36 | 0.5 | 16.4 | 0.16 | 5.00 | 1.32 |
| 52 | 1240 | EXCELLENT | 36 | 0.5 | 17.0 | 0.16 | 5.10 | 1.26 |
| 53 | 1260 | EXCELLENT | 30 | 0.6 | 16.0 | 0.14 | 4.52 | 1.10 |
| 54 | 1280 | EXCELLENT | 27 | 0.8 | 2.0 | 0.12 | 4.05 | 0.93 |
| 55 | 1220 | EXCELLENT | 38 | 2.5 | 14.2 | 0.32 | 0.84 | 0.70 |
| 56 | 1240 | EXCELLENT | 38 | 2.8 | 14.4 | 0.29 | 0.76 | 0.71 |
| 57 | 1280 | EXCELLENT | 40 | 0.9 | 13.2 | 0.16 | 2.70 | 1.05 |
| 58 | 1300 | EXCELLENT | 42 | 0.9 | 14.0 | 0.15 | 2.63 | 1.10 |
| 59 | 1220 | EXCELLENT | 38 | 2.3 | 14.2 | 0.38 | 0.76 | 0.90 |
| *60 | 1240 | ROUGH SURFACE | 30 | 0.4 | 7.5 | 0.13 | 4.50 | 1.00 |
| *61 | 1220 | ROUGH SURFACE | 25 | 0.8 | 14.4 | 0.09 | 3.15 | 0.72 |
| *62 | 1240 | ROUGH SURFACE | 29 | 0.1 | 8.8 | 0.12 | 2.40 | 0.95 |
| *63 | 1240 | ROUGH SURFACE | 47 | 0.9 | 7.5 | 0.10 | 1.22 | 0.75 |

* COMPARATIVE EXAMPLE

## FIG. 10

| No. | RATIO OF MAIN COMPONENT (MOL%) | | | | ADDITIVE AND AMOUNT THEREOF (PARTS BY WEIGHT) | | | | | | | |
|---|---|---|---|---|---|---|---|---|---|---|---|---|
| | $SiO_2$ | AVERAGE PARTICLE DIAMETER OF POWDER ($\mu$m) | $Al_2O_3$ | AVERAGE PARTICLE DIAMETER OF POWDER ($\mu$m) | FELDSPAR | KAOLINITE | PETALITE | $BaSiO_3$ | $BaTiO_3$ | $BaZrO_3$ | $SrSiO_3$ | SiC |
| 64 | 99.5 | 0.7 TO 1.5 | 0.5 | 1.5 TO 5.0 | 2.0 | | | | | | | |
| 65 | 99.0 | 07. TO 1.5 | 1.0 | 1.5 TO 5.0 | 2.0 | | | | | | | |
| 66 | 95.0 | 07. TO 1.5 | 5.0 | 1.5 TO 5.0 | 2.0 | | | | | | | |
| 67 | 90.0 | 07. TO 1.5 | 10.0 | 1.5 TO 5.0 | 2.0 | | | | | | | |
| 68 | 75.0 | 07. TO 1.5 | 25.0 | 1.5 TO 5.0 | 2.0 | | | | | | | |
| 69 | 65.0 | 07. TO 1.5 | 35.0 | 1.5 TO 5.0 | 2.0 | | | | | | | |
| 70 | 95.0 | 0.7 TO 1.5 | 5.0 | 0.3 TO 1.5 | 2.0 | | | | | | | |
| 71 | 95.0 | 3.0 TO 7.0 | 5.0 | 5.0 TO 8.0 | 2.0 | | | | | | | |
| 72 | 98.0 | 1.5 TO 3.0 | 2.0 | 0.3 TO 1.5 | | | | 0.2 | 0.5 | | | |
| 73 | 98.0 | 1.5 TO 3.0 | 2.0 | 0.3 TO 1.5 | | | | | 2.0 | | | |
| 74 | 98.0 | 1.5 TO 3.0 | 2.0 | 0.3 TO 1.5 | 1.5 | | | | 2.0 | | | |
| 75 | 98.0 | 1.5 TO 3.0 | 2.0 | 0.3 TO 1.5 | | 5.0 | | | | 3.0 | | |
| 76 | 98.0 | 1.5 TO 3.0 | 2.0 | 0.3 TO 1.5 | 1.5 | | | | 0.5 | | 3.5 | |
| 77 | 98.0 | 1.5 TO 3.0 | 2.0 | 0.3 TO 1.5 | | | | | | | | 5.0 |
| 78 | 96.0 | 0.7 TO 1.5 | 4.0 | 1.5 TO 5.0 | 5.0 | | | | 0.2 | | | |
| *79 | 99.9 | 0.7 TO 1.5 | 0.1 | 1.5 TO 5.0 | 2.0 | | | | | | | |
| *80 | 63.0 | 07. TO 1.5 | 37.0 | 1.5 TO 5.0 | 2.0 | | | | | | | |
| *81 | 95.0 | 0.2 OR LESS | 5.0 | 0.3 OR LESS | 2.0 | | | | | | | |
| *82 | 95.0 | 0.2 TO 0.7 | 5.0 | 10 OR MORE | 2.0 | | | | | | | |
| *83 | 98.0 | 1.5 TO 3.0 | 2.0 | 0.3 TO 1.5 | 0.02 | | | | 0.02 | | | |
| *84 | 98.0 | 1.5 TO 3.0 | 2.0 | 0.3 TO 1.5 | | 1.0 | | | 10.0 | | 1.0 | |

* COMPARATIVE EXAMPLE

## FIG. 11

| pd | OPTIMUM SINTERING TEMPERATURE (°C) | SINTERED STATE | AVERAGE POROSITY (%) | AVERAGE PORE DIAMETER (μm) | MECHANICAL STRENGTH (MPa) | NORMALIZED FLOW RATE COEFFICIENT | NORMALIZED PRESSURE COEFFICIENT | TRANSFER EFFICIENCY COEFFICIENT |
|---|---|---|---|---|---|---|---|---|
| | SINTERING CONDITIONS AND PROPERTIES | | | | | ELECTROOSMOTIC FUNCTION INDEX | | |
| 64 | 1130 | EXCELLENT | 39 | 0.4 | 18.6 | 0.19 | 5.60 | 1.36 |
| 65 | 1130 | EXCELLENT | 38 | 0.4 | 20.6 | 0.18 | 5.50 | 1.38 |
| 66 | 1130 | EXCELLENT | 38 | 0.5 | 21.6 | 0.16 | 5.17 | 1.40 |
| 67 | 1130 | EXCELLENT | 36 | 0.6 | 22.7 | 0.18 | 5.50 | 1.49 |
| 68 | 1200 | EXCELLENT | 31 | 0.7 | 24.8 | 0.16 | 4.83 | 1.26 |
| 69 | 1260 | EXCELLENT | 28 | 0.7 | 27.3 | 0.13 | 4.17 | 1.04 |
| 70 | 1130 | EXCELLENT | 36 | 0.3 | 16 | 0.16 | 5.50 | 1.21 |
| 71 | 1150 | EXCELLENT | 36 | 1.9 | 18.8 | 0.30 | 1.00 | 0.74 |
| 72 | 1130 | EXCELLENT | 38 | 0.9 | 19.7 | 0.19 | 3.40 | 1.63 |
| 73 | 1220 | EXCELLENT | 37 | 1 | 22.8 | 0.21 | 2.60 | 0.91 |
| 74 | 1180 | EXCELLENT | 39 | 0.9 | 24 | 0.29 | 3.50 | 1.82 |
| 75 | 1250 | EXCELLENT | 31 | 0.9 | 17.7 | 0.28 | 3.40 | 1.63 |
| 76 | 1200 | EXCELLENT | 42 | 0.9 | 19.6 | 0.25 | 2.97 | 1.93 |
| 77 | 1280 | EXCELLENT | 47 | 0.8 | 27 | 0.20 | 2.53 | 1.37 |
| 78 | 1080 | EXCELLENT | 40 | 0.4 | 14.6 | 0.20 | 5.33 | 1.06 |
| *79 | 1130 | ROUGH SURFACE | 31 | 0.4 | 7.9 | 0.19 | 5.00 | 1.16 |
| *80 | 1300 | ROUGH SURFACE | 26 | 0.9 | 16.4 | 0.09 | 2.67 | 0.75 |
| *81 | 1130 | ROUGH SURFACE | 30 | 0.2 | 8.4 | 0.06 | 2.67 | 0.24 |
| *82 | 1170 | ROUGH SURFACE | 42 | 0.3 | 8.5 | 0.10 | 2.30 | 0.50 |
| *83 | 1180 | ROUGH SURFACE | 31 | 0.9 | 6.3 | 0.14 | 1.30 | 1.10 |
| *84 | 1240 | ROUGH SURFACE | 5.3 | 0.8 | 10.8 | 0.11 | 1.93 | 0.80 |

* COMPARATIVE EXAMPLE

EP 2 065 353 A1

# FIG. 12

| No. | CALCINING TEMPERATURE (°C) | PARTICLE DIAMETER OF CALCINED POWDER | SINTERING TEMPERATURE (°C) | CRYSTAL STATE | AVERAGE POROSITY (%) | AVERAGE PORE DIAMETER ($\mu$m) | MECHANICAL STRENGTH (MPa) |
|---|---|---|---|---|---|---|---|
| | | | SINTERING CONDITIONS AND PROPERTIES | | | | |
| 85 | 950 | 0.1 TO 1.0 | 1220 | SPHERICAL CLUMPED | 41 | 0.8 | 14.2 |
| 86 | 950 | 0.1 TO 1.0 | 1260 | SPHERICAL CLUMPED | 35 | 0.6 | 15.2 |
| 87 | 950 | 1.0 TO 3.0 | 1120 | SPHERICAL | 40 | 0.5 | 15.8 |
| 88 | 1100 | 1.0 TO 3.0 | 1120 | SPHERICAL | 42 | 0.5 | 16.4 |
| 89 | 1200 | 1.0 TO 3.0 | 1120 | SPHERICAL | 46 | 0.6 | 14.5 |
| 90 | 950 | 3.0 TO 8.5 | 1120 | SPHERICAL CLUMPED | 42 | 0.6 | 13.8 |
| 91 | 950 | 1.0 TO 3.0 | 1000 | SPHERICAL | 41 | 0.5 | 13.0 |
| 92 | 950 | 1.0 TO 3.0 | 1200 | SPHERICAL | 35 | 0.5 | 18.5 |
| 93 | 950 | 1.0 TO 3.0 | 1260 | SPHERICAL CLUMPED | 32 | 0.6 | 20.4 |
| 94 | 1080 | 1.0 TO 3.0 | 1240 | SPHERICAL | 36 | 0.5 | 17.0 |
| 95 | 1080 | 1.0 TO 3.0 | 1260 | SPHERICAL | 34 | 0.6 | 17.5 |
| 96 | 1080 | 1.0 TO 3.0 | 1100 | SPHERICAL | 41 | 0.9 | 20.7 |
| 97 | 1080 | 1.0 TO 3.0 | 1180 | SPHERICAL | 39 | 0.9 | 24.0 |
| 98 | 1080 | 1.0 TO 3.0 | 1230 | SPHERICAL | 34 | 1 | 26.3 |
| *99 | 950 | 0.1 TO 1.0 | 1220 | NONUNIFORM CLUMPED | 32 | 0.4 | 8.0 |
| *100 | 750 | 1.0 TO 3.0 | 1120 | NONUNIFORM CLUMPED | 37 | 0.5 | 9.4 |
| *101 | 1300 | 1.0 TO 3.0 | 1120 | NONUNIFORM CLUMPED | 52 | 0.7 | 10.2 |
| *102 | 950 | 0.1 OR LESS | 1120 | SPHERICAL CLUMPED | 30 | 0.7 | 10.7 |
| *103 | 950 | 8.5 OR MORE | 1120 | CLUMPED | 44 | 0.9 | 8.5 |
| *104 | 950 | 2.0 TO 3.0 | 980 | NONUNIFORM CLUMPED | 54 | 0.9 | 5.3 |
| *105 | 950 | 1.0 TO 3.0 | 1360 | NONUNIFORM CLUMPED | 23 | 1.3 | 6.4 |

\* COMPARATIVE EXAMPLE

## FIG. 13

| No. | TYPE OF LIQUID | ELECTROOSMOTIC FUNCTION INDEX | | | LOAD LIFE |
|---|---|---|---|---|---|
| | | NORMALIZED FLOW RATE COEFFICIENT | NORMALIZED PRESSURE COEFFICIENT | TRANSFER EFFICIENCY COEFFICIENT | NORMALIZED FLOW RATE COEFFICIENT AFTER 1000 HOURS |
| 85 | METHANOL | 0. 25 | 4. 00 | 1. 58 | 0. 19 |
| 86 | METHANOL | 0. 17 | 3. 42 | 1. 30 | 0. 12 |
| 87 | METHANOL | 0. 22 | 6. 67 | 1. 53 | 0. 2 |
| 88 | METHANOL | 0. 22 | 6. 56 | 1. 50 | 0. 2 |
| 89 | METHANOL | 0. 18 | 4. 73 | 1. 20 | 0. 14 |
| 90 | METHANOL | 0. 18 | 6. 00 | 1. 34 | 0. 14 |
| 91 | METHANOL | 0. 19 | 6. 36 | 1. 45 | 0. 17 |
| 92 | METHANOL | 0. 18 | 6. 00 | 1. 33 | 0. 16 |
| 93 | METHANOL | 0. 14 | 5. 20 | 1. 30 | 0. 13 |
| 94 | METHANOL | 0. 16 | 5. 10 | 1. 26 | 0. 15 |
| 95 | METHANOL | 0. 14 | 4. 80 | 1. 24 | 0. 13 |
| 96 | METHANOL | 0. 29 | 3. 30 | 1. 80 | 0. 28 |
| 97 | METHANOL | 0. 29 | 3. 50 | 1. 82 | 0. 29 |
| 98 | METHANOL | 0. 20 | 2. 90 | 1. 54 | 0. 2 |
| *99 | METHANOL | 0. 07 | 3. 33 | 1. 10 | 0. 05 |
| *100 | METHANOL | 0. 14 | 3. 55 | 1. 08 | 0. 09 |
| *101 | METHANOL | 0. 10 | 3. 60 | 1. 00 | 0. 06 |
| *102 | METHANOL | 0. 11 | 3. 65 | 1. 05 | 0. 08 |
| *103 | METHANOL | 0. 10 | 3. 11 | 0. 90 | 0. 05 |
| *104 | METHANOL | 0. 07 | 2. 60 | 0. 75 | 0. 03 |
| *105 | METHANOL | 0. 05 | − | − | − |

* COMPARATIVE EXAMPLE

EP 2 065 353 A1

## INTERNATIONAL SEARCH REPORT

| International application No. |
| --- |
| PCT/JP2007/068564 |

A. CLASSIFICATION OF SUBJECT MATTER
*C04B38/00*(2006.01)i, *B81B1/00*(2006.01)i, *F04B9/00*(2006.01)i, *F04B53/00*
(2006.01)i, *G01N27/447*(2006.01)i

According to International Patent Classification (IPC) or to both national classification and IPC

B. FIELDS SEARCHED

Minimum documentation searched (classification system followed by classification symbols)
C04B38/00-38/10, B81B1/00, F04B9/00, F04B53/00, G01N27/447

Documentation searched other than minimum documentation to the extent that such documents are included in the fields searched
Jitsuyo Shinan Koho          1922-1996     Jitsuyo Shinan Toroku Koho     1996-2007
Kokai Jitsuyo Shinan Koho    1971-2007     Toroku Jitsuyo Shinan Koho     1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2006-132998 A  (Shimadzu Corp.),<br>25 May, 2006 (25.05.06),<br>Par. Nos. [0006] to [0008]<br>(Family: none) | 1-7,10<br>8,9 |
| A | JP 2006-208189 A  (Kyocera Corp.),<br>10 August, 2006 (10.08.06),<br>Par. Nos. [0046] to [0054]<br>(Family: none) | 1-10 |
| A | JP 2006-22807 A  (Science Solutions<br>International Laboratory, Inc.),<br>26 January, 2006 (26.01.06),<br>Par. No. [0084]<br>& WO 2005/120696 A1 | 1-10 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 October, 2007 (12.10.07) | Date of mailing of the international search report<br>30 October, 2007 (30.10.07) |
| --- | --- |
| Name and mailing address of the ISA/<br>Japanese Patent Office | Authorized officer |
| Facsimile No. | Telephone No. |

Form PCT/ISA/210 (second sheet) (April 2007)

## INTERNATIONAL SEARCH REPORT

| International application No. |
|---|
| PCT/JP2007/068564 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    A common matter among the inventions of claims 1, 2, 4 and 5 which relate to a electroosmotic material is a fact that the electroosmotic material to be used in an electroosmotic flow pump is mainly composed of fused quartz or fused silicate, wherein the fused quartz or fused silicate has an average particle size of 0.2 to 7.5 μm. However, the common matter is already disclosed in the paragraphs [0006] to [0008] in JP 2006-132998 A and therefore cannot be regarded as a special technical feature. Consequently, there is no special technical feature common to the inventions of the above-mentioned claims, and these inventions do not form a general inventive concept.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the
☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020189947 A

- JP 2006516831 W